# EUROPEAN PATENT APPLICATION

(11) **EP 4 451 006 A1**
(43) Date of publication of application: **23.10.2024**
(21) Application number: 22911311.3
(22) Date of filing: 21.12.2022
(51) Int. Cl.: G01S 7/4865, G01S 7/4863, H04N 25/705

(54) **DISTANCE IMAGE MEASURING DEVICE, AND DISTANCE IMAGE MEASURING METHOD**

(30) Priority: 23.12.2021 JP 2021209038
(71) Applicant: National University Corporation Shizuoka University, Shizuoka-shi, Shizuoka 422-8529 (JP)
(72) Inventor: KAWAHITO Shoji, Hamamatsu-shi, Shizuoka 432-8561 (JP)
(74) Representative: Wittmer, Maximilian
(86) International application number: PCT/JP2022/047224
(87) International publication number: WO 2023/120609

(57) **Abstract**

A distance image sensor 10 includes a light source 11 configured to generate pulsed light L_{P}, a light source driver 31 configured to control the light source 11, a pixel circuit 13 including a photoelectric conversion region 21, charge readout regions 22₁ to 22₄, and control electrodes G₁ to G₄, a pixel driver 32 configured to repeatedly apply control pulses G(1) to G(4) to the control electrodes G₁ to G₄ within a frame period while being delayed from a generation timing of the pulsed light L_{P}, and a signal readout circuit 15 configured to read out detection signals of charge amounts accumulated in the charge readout region 22₁ to 22₄, and the signal readout circuit 15 reads out the detection signals from a group of charge readout regions 22₁ to 22₄ obtained by dividing the charge readout regions 22₁ to 22₄ into N (N is an integer equal to or greater than 2) at different readout timings for each group of the charge readout regions 22₁ to 22₄ divided into N within the frame period.

## Description

### Technical Field

The present disclosure relates to a distance image measuring device and a distance image measuring method for generating a distance image including distance information for each pixel.

### Background Art

In related art, a device that generates an image signal including distance information using a time of flight of light has been used (see, for example, Patent Literature 1 below). The device described in Patent Literature 1 below generates pulsed light from a light source, accumulates charges generated in response to the pulsed light in a plurality of charge readout regions in a pixel circuit in different periods set by control pulses, reads out voltages of the plurality of charge readout regions as detection signals and calculates a distance for each pixel based on the detection signals to acquire distance information.

### Citation List

### Patent Literature

Patent Literature 1: WO 2019/078366 A

### Summary of Invention

### Technical Problem

In the above-described device in the related art, it has been desired to improve distance resolution when an object in a wide distance range is to be measured.

The present disclosure has been made in view of the above problem, and an object of the present disclosure is to provide a distance image measuring device and a distance image measuring method capable of generating an image signal with improved distance resolution in a case where an object in a wide distance range is to be measured.

### Solution to Problem

In order to solve the above problem, a distance image measuring device according to one aspect of the present disclosure includes: a light source configured to generate pulsed light; a light source control unit configured to control the light source so as to repeatedly generate the pulsed light within a periodic frame period; a pixel circuit unit including a photoelectric conversion region that converts light into charges, first to M-th (M is an integer equal to or greater than 2) charge readout regions provided close to the photoelectric conversion region and spaced apart from each other, and first to M-th control electrodes respectively provided corresponding to the photoelectric conversion region and the first to the M-th charge readout regions and provided for applying first to M-th control pulses for charge transfer between the photoelectric conversion region and the first to the M-th charge readout regions; a charge transfer control unit configured to repeatedly apply the first to the M-th control pulses to the first to the M-th control electrodes within the frame period while being delayed from a generation timing of the pulsed light by the light source control unit, and a signal readout unit configured to read out detection signals corresponding to first to the M-th charge amounts which are amounts of charges accumulated in the first to the M-th charge readout regions of the pixel circuit unit, from the first to the M-th charge readout regions, and the signal readout unit reads out the detection signals from a group of charge readout regions obtained by dividing the first to the M-th charge readout regions into N (N is an integer equal to or greater than 2) at different readout timings for each group of the charge readout regions divided into N within the frame period.

Alternatively, a distance image measuring method according to another aspect of the present disclosure includes: a light source control step of a light source control unit controlling a light source so as to repeatedly generate pulsed light within a periodic frame period; a charge transfer control step of, using a pixel circuit unit including a photoelectric conversion region that converts light into charges, first to M-th (M is an integer equal to or greater than 2) charge readout regions provided close to the photoelectric conversion region and spaced apart from each other, and first to M-th control electrodes respectively provided corresponding to the photoelectric conversion region and the first to the M-th charge readout regions and provided for applying first to M-th control pulses for charge transfer between the photoelectric conversion region and the first to the M-th charge readout regions, a charge transfer control unit repeatedly applying the first to the M-th control pulses to the first to the M-th control electrodes within the frame period while being delayed from generation of the pulsed light by the light source control unit, and a signal readout step of a signal readout unit reading out detection signals corresponding to first to M-th charge amounts which are amounts of charges accumulated in the first to the M-th charge readout regions of the pixel circuit unit, from the first to the M-th charge readout regions, and in the signal readout step, the detection signals are read out from a group of charge readout regions obtained by dividing the first to the M-th charge readout regions into N (N is an integer equal to or greater than 2) at different readout timings for each group of the charge readout regions divided into N within the frame period.

According to the distance image measuring device or the distance image measuring method of the above aspect, pulsed light is periodically and repeatedly generated from the light source within a periodic frame period, and time windows for the first to the M-th charge readout regions are set within the frame period while being delayed from the generation of the pulsed light, and charges are transferred from the photoelectric conversion region of the pixel circuit unit to the first to the M-th charge readout regions in the respective time windows. Furthermore, detection signals corresponding to the first to the M-th charge amounts are read out from the first to the M-th charge readout regions of the pixel circuit unit. In this event, the detection signals are read out at different timings for each of the groups of the charge readout regions divided into N. As a result, the detection signals can be read out at different timings between a group of charge readout regions for which a time window corresponding to a timing of reflected light of pulsed light generated at a short distance is set and a group of charge readout regions for which a time window corresponding to a timing of reflected light of pulsed light generated at a long distance is set, and an exposure period of the reflected light can be changed between the groups of charge readout regions within a limited frame period. This results in making it possible to generate an image signal with improved distance resolution even in a case where an object in a wide distance range is to be measured.

### Advantageous Effects of Invention

According to the present disclosure, it is possible to improve distance resolution when an object in a wide distance range is to be measured.

### Brief Description of Drawings

FIG. 1 is a block diagram illustrating a schematic configuration of a distance image sensor 10 according to a preferred embodiment of the present disclosure.
FIG. 2 is a view for explaining arrangement and a connection configuration of a plurality of pixel circuits 13, a signal readout circuit 15, and a pixel driver 32 in the distance image sensor 10.
FIG. 3 is a view illustrating a connection relationship between the pixel circuits 13 and ADCs 45.
FIG. 4 is a circuit diagram illustrating a detailed configuration of the pixel circuit 13.
FIG. 5 is a view indicating timings of exposure operation and timings of signal readout operation for each of subframe periods obtained by temporally dividing a frame period for each of charge readout region 22₁ to 22₄ corresponding to control electrodes G₁ to G₄.
FIG. 6 is a timing chart indicating timings of electric signals to be output from a vertical readout control circuit 41 for each row of the pixel circuits 13 and control pulses to be output from the pixel driver 32 in association with the operation indicated in FIG. 5.
FIG. 7 is a timing chart for explaining timings of the control pulses indicated in FIG. 6.
FIG. 8 is a view indicating timings of exposure operation and timings of signal readout operation for each subframe period in a comparative example for each of the charge readout regions 22₁ to 22₄ corresponding to the control electrodes G₁ to G₄.
FIG. 9 is a circuit diagram illustrating a detailed configuration of the pixel circuit 13 according to a modification of a 6-tap configuration.
FIG. 10 is a circuit diagram illustrating a detailed configuration of the pixel circuit 13 according to a modification of the 6-tap configuration.
FIG. 11 is a circuit diagram illustrating a detailed configuration of the pixel circuit 13 according to a modification of a 3-tap configuration.
FIG. 12 is a view indicating timings of exposure operation and timings of signal readout operation for each subframe period in the modification for each of the charge readout regions 22₁ to 22₄ corresponding to the control electrodes G₁ to G₄.
FIG. 13 is a view indicating timings of exposure operation and timings of signal readout operation for each subframe period obtained by temporally dividing a frame period in the modification.
FIG. 14 is a view indicating timings of periods of exposure operation in each row of the pixel circuit 13 set by the pixel driver 32 according to the modification.
FIG. 15 is a view extracting and illustrating a circuit configuration around the pixel circuit 13 of some specific rows in the distance image sensor 10 according to the modification.
FIG. 16 is a timing chart indicating control timings of exposure operation in the modification.
FIG. 17 is a timing chart indicating control timings of exposure operation in the modification.

### Description of Embodiments

Hereinafter, a preferred embodiment of a distance image measuring device according to the present disclosure will be described in detail with reference to the drawings. Note that in the description of the drawings, the same or corresponding portions are denoted by the same reference numerals, and redundant description is omitted.

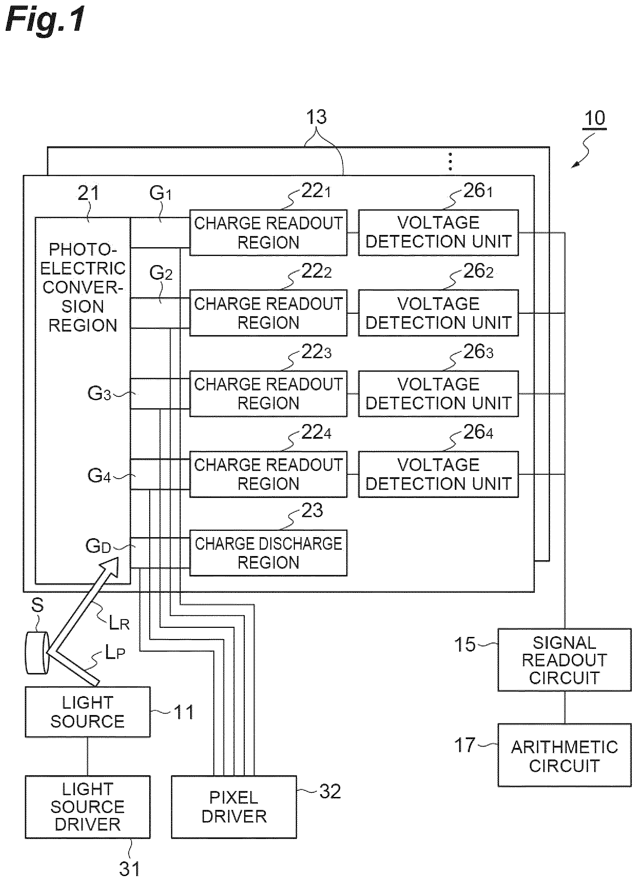

First, a function and a configuration of a distance image sensor 10 according to a preferred embodiment of the distance image measuring device of the present disclosure will be described with reference to FIG. 1. The distance image sensor 10 illustrated in FIG. 1 is a device that generates a distance image including distance information for each pixel using a time-of-flight method, and includes a light source 11, a plurality of pixel circuits (pixel circuit units) 13, a signal readout circuit (signal readout unit) 15, an arithmetic circuit 17, a light source driver (light source control unit) 31, and a pixel driver (charge transfer control unit) 32.

The light source 11 is a device that generates pulsed light L_{P} to be irradiated an object S with in order to perform distance measurement by the time of flight (TOF) method. The light source 11 includes, for example, a semiconductor light emitting element such as a light emitting diode or a laser diode and a drive circuit that drives the semiconductor light emitting element. As the light source 11, an element that generates light in a wavelength region such as a near-infrared region or a visible light region can be used.

Further, the distance image sensor 10 includes a plurality of pixel circuits 13. The plurality of pixel circuits 13 is arranged in a two-dimensional array in a two-dimensional direction (for example, in a column direction and a row direction) to constitute an image sensor and generates detection signals by photoelectrically converting incident pulsed light L_{R} generated by reflecting the pulsed light L_{P} by the object S.

In addition, the distance image sensor 10 includes the signal readout circuit 15, the arithmetic circuit 17, the light source driver 31, and the pixel driver 32. The arithmetic circuit 17 calculates distance information on the object S for each pixel using the detection signals generated by the plurality of pixel circuits 13 and generates and outputs a distance image including two-dimensional image information reflecting the distance information for each pixel. The signal readout circuit 15 controls readout of the detection signals from the plurality of pixel circuits 13. The light source driver 31 controls irradiation timings of the pulsed light L_{P} in the light source 11. The pixel driver 32 controls timings of charge transfer from the photoelectric conversion region to the charge readout regions in the plurality of pixel circuits 13 (which will be described in detail later). The arithmetic circuit 17, the light source driver 31, and the pixel driver 32 may be constituted with a dedicated integrated circuit such as a one-chip microcomputer including a CPU, a RAM, a ROM, an input/output device, and the like, or may be constituted with a general-purpose computer such as a personal computer. In the present embodiment, the signal readout circuit 15, the arithmetic circuit 17, the light source driver 31, and the pixel driver 32 are constituted with an onchip integrated circuit mounted on the same semiconductor chip together with the pixel circuits 13. Note that "on the same semiconductor chip" includes on different semiconductors among a plurality of semiconductor layers stacked using a silicon on insulator (SOI) technology or a through silicon via (TSV) technology.

Hereinafter, configurations of the pixel circuit 13, the signal readout circuit 15, the arithmetic circuit 17, the light source driver 31, and the pixel driver 32 will be described in detail.

First, the configuration of the pixel circuit 13 will be described. The pixel circuit 13 includes a photoelectric conversion region 21 constituted with a semiconductor element and having a function of converting incident pulsed light L_{R} into charges, first to fourth charge readout regions 22₁ to 22₄ and a charge discharge region 23 provided close to the photoelectric conversion region 21 and spaced apart from each other, first to fourth control electrodes G₁ to G₄ and a fifth control electrode G_{D} provided respectively corresponding to the first to the fourth charge readout regions 22₁ to 22₄ and the charge discharge region 23 and provided for applying control pulses for charge transfer from the photoelectric conversion region 21 to the respective regions, and voltage detection units 26₁ to 26₄ for reading out detection signals respectively from the first to the fourth charge readout regions 22₁ to 22₄. The voltage detection units 26₁ to 26₄ are, for example, amplifiers including a source follower amplifier, and selectively output voltages based on a reference potential of the charge readout regions 22₁ to 22₄ under control of the signal readout circuit 15. The selected voltages are detected and amplified by the signal readout circuit 15, and the amplified voltages of the respective charge readout regions 22₁ to 22₄ are output to the arithmetic circuit 17 as first to fourth detection signals.

The pixel circuit 13 is formed on, for example, a p-type semiconductor substrate such as a silicon substrate. In other words, the photoelectric conversion region 21 is provided in a central portion of a pixel formation region made of an active region forming layer made of a p-type semiconductor, an n-type surface embedded region, a p-type pinning layer, and an insulating film, which are sequentially formed on the p-type semiconductor substrate. Then, the n-type charge readout regions 22₁ to 22₄ and the charge discharge region 23 having a higher impurity concentration than the n-type surface embedded region are formed at positions spaced apart from each other so as to be close to the photoelectric conversion region 21, and the control electrodes G₁ to G₄ and G_{D} are provided on insulating films on charge transfer paths from the photoelectric conversion region 21 respectively to the charge readout regions 22₁ to 22₄ and the charge discharge region 23. Here, each of the control electrodes G₁ to G₄ and G_{D} may be provided on the charge transfer path or may be provided separately in a plurality of electrode portions so as to sandwich the charge transfer path from both sides.

In the pixel circuits 13 having the above configuration, control pulses having phases different from each other are applied from the pixel driver 32 to the control electrodes G₁ to G₄ and G_{D}. As a result, by sequentially changing a depletion potential of the surface embedded region, a potential gradient in which charges are transported to any of the charge transfer paths is sequentially formed, and a large number of carriers (charges) generated in the surface embedded region of the photoelectric conversion region 21 are transferred to any of the charge readout regions 22₁ to 22₄ and the charge discharge region 23. The charges moved to each of the charge readout regions 22₁ to 22₄ are accumulated in each of the charge readout regions 22₁ to 22₄, and the charges moved to the charge discharge region 23 are discharged from the pixel circuit 13. The charge discharge region 23 is a region for discharging the charges generated in the photoelectric conversion region 21.

The light source driver 31 controls light emission timings of the pulsed light L_{P} by the light source 11, intensity of the pulsed light L_{P}, and a pulse width of the pulsed light L_{P}. Specifically, the light source driver 31 performs control such that the pulsed light L_{P} having a duration Tₚ with intensity set in advance is repeatedly generated at equal intervals within a period of one frame that is a period T_{F} (for example, 1/120 sec) which has a length set in advance and is periodically repeated.

The pixel driver 32 has a function of applying the first to the fourth control pulses G(1) to G(4) and the fifth control pulse G(D) respectively to the control electrodes G₁ to G₄ and G_{D} of each pixel circuit 13. In other words, the pixel driver 32 repeatedly applies the first to the fourth control pulses G(1) to G(4) to the control electrodes G₁ to G₄ only during a duration T₁ that is equal to or longer than the duration Tₚ while being delayed from a periodic generation timing of the pulsed light L_{P} within one frame period. In the present embodiment, the duration T₁ is set to be equal to the duration Tₚ. In this event, the pixel driver 32 performs control to maintain a delay period of each timing of the first to the fourth control pulses G(1) to G(4) with respect to the generation timing of the pulsed light L_{P} to be a predetermined substantially constant period in a subframe period obtained by temporally dividing one frame period for each of groups of the control electrodes G₁ to G₄ corresponding to groups of charge readout regions obtained by dividing the four charge readout regions 22₁ to 22₄ into N_{D} (N_{D} is an integer equal to or greater than 2). In the present embodiment, for each of the group including the control electrodes G₁ and G₂ corresponding to the group including the charge readout regions 22₁ and 22₂ and the group including the control electrodes G₃ and G₄ corresponding to the group including the charge readout regions 22₃ and 22₄, obtained by dividing the charge readout regions into two, a delay period of the control pulses G(1) and G(2) and a delay period of the control pulses G(3) and G(4) in the subframe period set for each group are controlled to be substantially constant (which will be described in detail later).

The signal readout circuit 15 is a circuit that reads out detection signals corresponding to amounts of charges transferred to the charge readout regions 22₁ to 22₄ of each pixel circuit 13 in each subframe period by controlling the voltage detection units 26₁ to 26₄. The arithmetic circuit 17 repeatedly executes calculation of a distance for each pixel circuit 13 for a plurality of frame periods based on the detection signals read out for each pixel circuit 13 by the signal readout circuit 15, repeatedly generates a distance image including distance information obtained as a result, and outputs the distance image to the outside.

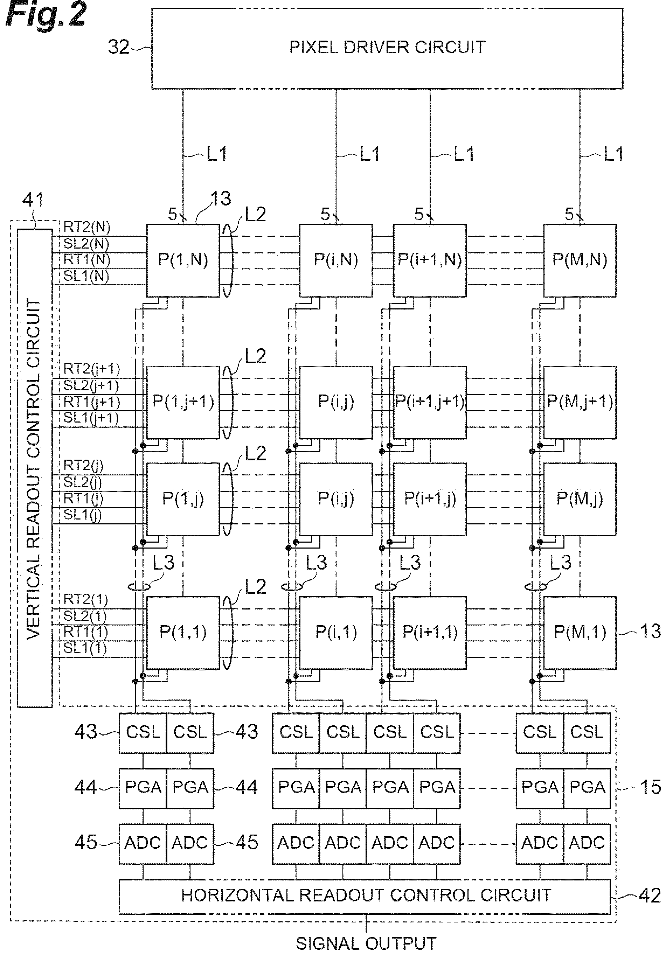

Here, arrangement and a connection configuration of the plurality of pixel circuits 13, the signal readout circuit 15, and the pixel driver 32 in the distance image sensor 10 will be described with reference to FIG. 2.

The plurality of pixel circuits 13 are arranged in a two-dimensional array at substantially equal intervals in a two-dimensional direction (for example, in the column direction and in the row direction) on the semiconductor substrate. For example, FIG. 2 illustrates a configuration example of N × M pixel circuits 13 arranged in N rows and M columns (M and N are integers equal to or greater than 2), and the pixel circuit 13 in the i-th column and the j-th row (i is an integer equal to or greater than 1 and equal to or less than M, and j is an integer equal to or greater than 1 and equal to or less than N) is expressed as "P(i, j)" (similarly described in the following description). The pixel driver 32 is connected in parallel to the control electrodes G₁ to G₄ and G_{D} of the N pixel circuits 13 in the respective columns via a wiring portion L1. Thus, the first to the fourth control pulses G(1) to G(4) and the fifth control pulse G(D) can be simultaneously applied from the pixel driver 32 to all the pixel circuits 13 via the M wiring portions L1 connected to the pixel circuits 13 of the respective columns.

In addition, the signal readout circuit 15 includes a vertical readout control circuit 41, a horizontal readout control circuit 42, and a current source load (CSL) 43, a program gain amplifier (PGA) 44, and an analogto-digital converter (ADC) 45 provided for each column of the pixel circuit 13 in the number of sets (two sets in the present embodiment) corresponding to the number of charge readout regions of each group divided into N_{D}. The vertical readout control circuit 41 is electrically connected to the M pixel circuits 13 in each row via wiring portions L2 whose number is twice the number of divisions N_{D} of the groups of the charge readout regions and simultaneously outputs selection signals SL1 and SL2 and reset signals RT1 and RT2 to the M pixel circuits 13 in each row via the wiring portions L2. The selection signals SL1 and SL2 are electric signals for selecting a group from which the detection signals are to be read out among the plurality of divided groups of the charge readout regions, and the reset signals RT1 and RT2 are electric signals for resetting charges of the charge readout regions of one group among the plurality of divided groups of the charge readout regions. In FIG. 2, the selection signals SL1 and SL2 and the reset signals RT1 and RT2 output to the j-th row pixel circuits 13 are expressed as "SL1(j)", "SL2(j)", "RT1(j)", and "RT2(j)", respectively (similarly described in the following description). One set of circuits including the CSL 43, the PGA 44, and the ADC 45 is sequentially connected in series to the N pixel circuits 13 in the corresponding column via the wiring portion L3. The CSL 43 is a current source that supplies currents flowing from the voltage detection units 26₁ to 26₄ of the pixel circuits 13 belonging to the row selected by the vertical readout control circuit 41 to the wiring portion L3. The PGA 44 is a circuit that detects detection signals generated by supply of the currents by the CSL 43 from the voltage detection units 26₁ to 26₄ of the pixel circuits 13 selected by the vertical readout control circuit 41 and amplifies the detection signals. The ADC 45 is a circuit that converts the detection signals amplified by the PGA 44 into digital signals. The horizontal readout control circuit 42 is a circuit for collecting the two detection signals output from the two ADCs 45 provided corresponding to columns of the pixel circuits 13 for each row and outputting them to the arithmetic circuit 17.

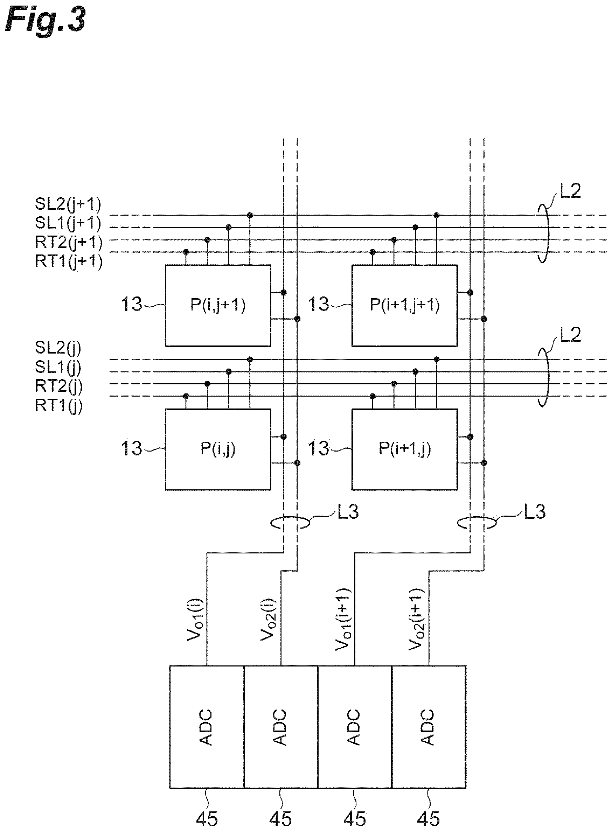

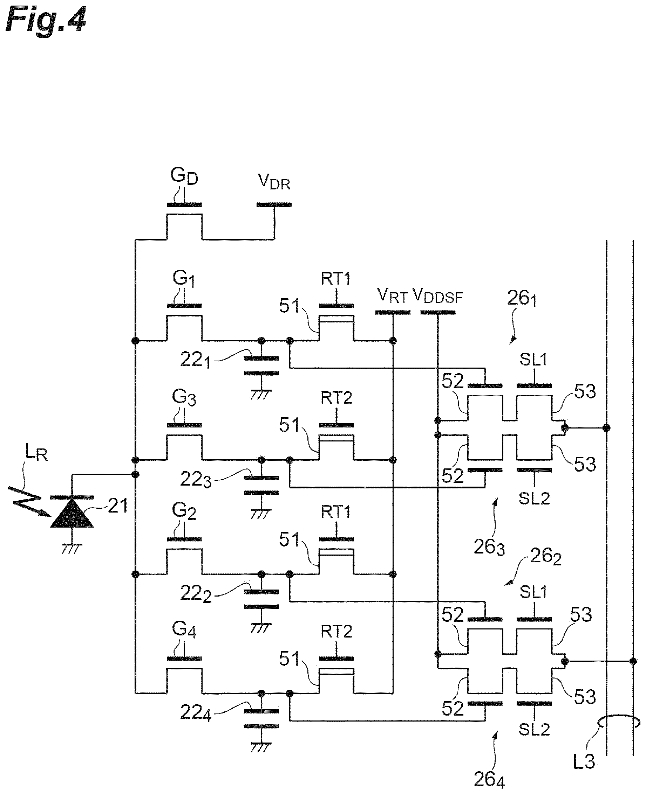

With reference to FIG. 3 and FIG. 4, a connection relationship between the pixel circuits 13 and the ADCs 45 and a selection function of the charge readout regions of the pixel circuits 13 by the signal readout circuit 15 will be described in detail. FIG. 3 is a view illustrating a connection relationship between the pixel circuits 13 and the ADCs 45, and FIG. 4 is a circuit diagram illustrating a detailed configuration of the pixel circuit 13. In FIG. 3, the CSL 43 and the PGA 44 are not illustrated for convenience of description.

As described above, two ADCs 45 corresponding to the number of grouped charge readout regions are connected in parallel to the pixel circuits 13 of each column via two wiring portions (signal lines) L3 (FIG. 3). Furthermore, as illustrated in FIG. 4, the pixel circuit 13 includes reset transistors 51, amplification transistors 52, and selection transistors (switches) 53 constituting the voltage detection units 26₁ to 26₄ for each of the four charge readout regions 22₁ to 22₄. The reset transistors 51 are connected between the charge readout regions 22₁ to 22₄ and a reset potential V_{RT}, and have a role of resetting the charges accumulated in the charge readout regions 22₁ to 22₄ in response to application of any of the reset signals RT1 and RT2 from the vertical readout control circuit 41. The amplification transistors 52 have gates electrically connected to the charge readout regions 22₁ to 22₄, drains supplied with a potential VDDSF, and sources connected to one of the two wiring portions L3 via the selection transistors 53. In addition, one of the selection signals SL1 and SL2 from the vertical readout control circuit 41 is applied to gates of the selection transistors 53, and the selection transistors 53 have drains connected to the sources of the amplification transistors 52, and the sources connected to one of the two wiring portions L3. If the selection signals SL1 and SL2 are applied to the gates of the selection transistors 53 in the transistors 52 and 53, connections between the sources of the amplification transistors 52 and the wiring portions L3 are turned on. As a result, a source follower circuit is formed by the amplification transistors 52 and the CSL 43 (FIG. 2), and detection signals according to the potentials of the charge readout regions 22₁ to 22₄ to which the amplification transistors 52 are connected, that is, detection signals corresponding to the first to the fourth charge amounts accumulated in the charge readout regions 22₁ to 22₄ are output onto the wiring portions L3.

Note that the two reset transistors 51 connected to the charge readout regions 22₁ and 22₂ of one group are configured such that one reset signal RT1 is applied, and the two reset transistors 51 connected to the charge readout regions 22₃ and 22₄ of the other group are configured such that the other reset signal RT2 is applied. Furthermore, the two selection transistors 53 connected to the charge readout regions 22₁ and 22₂ of one group are configured such that one selection signal SL1 is applied, and the two selection transistors 53 connected to the charge readout regions 22₃ and 22₄ of the other group are configured such that the other selection signal SL2 is applied. Furthermore, the two selection transistors 53 connected to the charge readout regions 22₁ and 22₂ of one group are configured to be separately connected to the two wiring portions L3, and the two selection transistors 53 connected to the charge readout regions 22₃ and 22₄ of the other group are configured to be separately connected to the two wiring portions L3.

In such a configuration, by generating the reset signals RT1(j) and RT2(j) for each row by the vertical readout control circuit 41, resetting of the charges accumulated for each group of the charge readout regions 22₁ and 22₂ can be controlled in the pixel circuits 13 belonging to each row. In addition, by generating the selection signals SL1(j) and SL2(j) for each row by the vertical readout control circuit 41, in the pixel circuits 13 of the i-th column (i is an integer equal to or greater than 1 and equal to or less than M) belonging to each row, two detection signals V_{O1}(i) and V_{O2}(i) can be simultaneously (in parallel) output to the ADCs 45 from two charge readout regions (charge readout regions 22₁ and 22₂ or charge readout regions 22₃ and 22₄) belonging to the selected group via the two wiring portions L3.

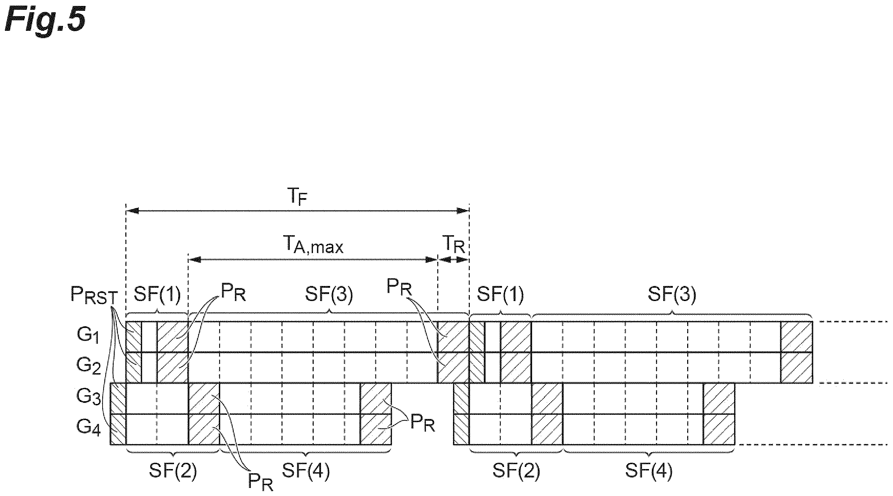

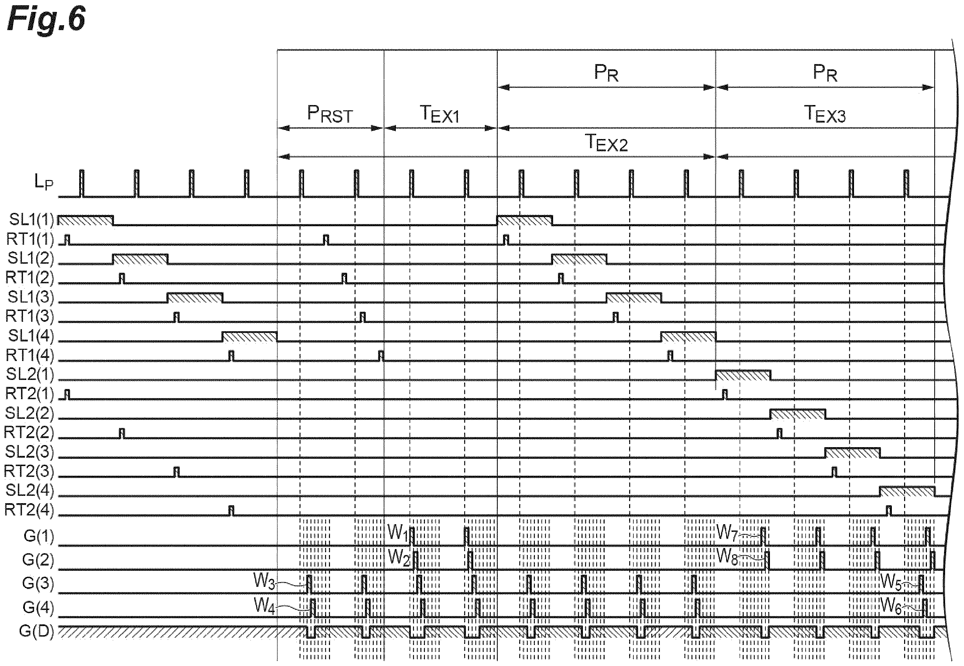

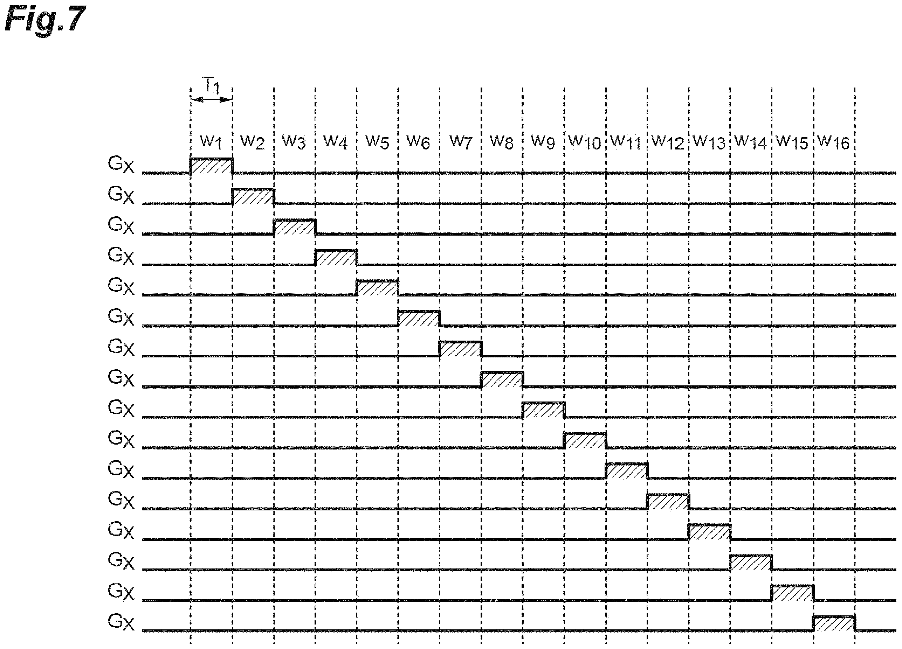

Next, details of the charge transfer control function and the signal readout function in the subframe period which is a period obtained by dividing one frame period by the pixel driver 32 and the signal readout circuit 15 will be described with reference to FIG. 5 to FIG. 7. FIG. 5 is a view indicating timings of exposure operation and timings of signal readout operation for each subframe period obtained by temporally dividing the frame period for each of the charge readout regions 22₁ to 22₄ corresponding to the control electrodes G₁ to G₄, FIG. 6 is a timing chart indicating timings of electric signals output from the vertical readout control circuit 41 for each row of the pixel circuits 13 and control pulses output from the pixel driver 32 in association with the operation indicated in FIG. 5, and FIG. 7 is a timing chart for explaining timings of the control pulses indicated in FIG. 6. Note that, in FIG. 5, a period occupying one frame period T_{F} is represented by being divided into a plurality of rectangular blocks whose size in the horizontal direction corresponds to a length of a period, and each rectangular block is assigned with identification indicating a type of processing to be controlled by the pixel driver 32 and the signal readout circuit 15. Specifically, a period during which the exposure operation is executed is indicated by a white rectangular block, a period during which the charge reset operation is executed is indicated by a shaded rectangular block denoted by a reference sign P_{RST}, and a period during which the signal readout operation is executed is indicated by a shaded rectangular block denoted by a reference sign P_{R}.

As indicated in FIG. 5, in one frame period T_{F}, subframe periods SF(1) and SF(3) are set for the charge readout regions 22₁ and 22₂ of one of the groups that are grouped, and subframe periods SF(2) and SF(4) parallel to the subframe periods SF(1) and SF(3) are set for the charge readout regions 22₃ and 22₄ of the other of the groups that are grouped. In the first subframe period SF(1), after the charge reset operation of resetting the charges accumulated in the charge readout regions 22₁ and 22₂ is executed under the control of the signal readout circuit 15, the exposure operation of transferring the charges from the photoelectric conversion region 21 to the charge readout regions 22₁ and 22₂ is executed under the control of the pixel driver 32, and thereafter, the signal readout operation of reading out the detection signals from the charge readout regions 22₁ and 22₂ is executed under the control of the signal readout circuit 15. In the next subframe period SF(3) subsequent to the subframe period SF(1), the exposure operation for the charge readout regions 22₁ and 22₂ is executed under the control of the pixel driver 32, and thereafter, the signal readout operation for the charge readout regions 22₁ and 22₂ is executed under the control of the signal readout circuit 15. Furthermore, in the subframe period SF(2) that starts at the same time as the subframe period SF(1), the exposure operation for the charge readout regions 22₃ and 22₄ is executed under the control of the pixel driver 32, and thereafter, the signal readout operation for the charge readout regions 22₃ and 22₄ is executed under the control of the signal readout circuit 15. Furthermore, in the next subframe period SF(4) subsequent to the subframe period SF(2), the exposure operation for the charge readout regions 22₃ and 22₄ is executed under the control of the pixel driver 32, and thereafter, the signal readout operation for the charge readout regions 22₃ and 22₄ is executed under the control of the signal readout circuit 15.

Here, a length T_{R} of the period P_{R} of the signal readout operation controlled to be executed in each of the subframe periods SF(1) to SF(4) is set to a period determined by the number of rows of the pixel circuits 13 and performance of the signal readout function, and a length of a period of the exposure operation controlled to be executed in each of the subframe periods SF(1) to SF(4) is set to a length corresponding to a delay period of each of the first to the fourth control pulses G(1) to G(4) applied in each period.

With reference to FIG. 6, temporal changes of various signals to be applied to the pixel circuits 13 in the control state indicated in FIG. 5 will be described in detail. Note that a reference sign Wₖ (k is an integer equal to or greater than 1) is also written in each control pulse G(X) (X is an integer of any one of 1, 2, 3, and 4) indicated in FIG. 6, and the number "k" attached to the reference sign Wₖ corresponds to the delay period of the control pulse G(X) with respect to the pulsed light L_{P}. For example, W₁ indicates that the delay period is 0, and in a case where k is increased by 1, it means that the delay period is increased by a duration T₁=T_{P} of the control pulse G(X) (FIG. 7).

As described above, in the period P_{RST} of the charge reset operation in the subframe period SF(1), the reset signal RT1 output for resetting the charge readout regions 22₁ and 22₂ of one group is sequentially turned on for each row. In a subsequent period T_{EX1} of the exposure operation in the subframe period SF(1), the control pulses G(1) and G(2) for exposure operation control of the charge readout regions 22₁ and 22₂ of one group are repeatedly turned on so as to set the delay periods for the pulsed light L_{P} to be constant. Specifically, the control pulse G(1) is set to a timing specified by the reference numeral W₁, and the control pulse G(2) is set to a timing specified by the reference numeral W₂. In the subsequent period P_{R} of the signal readout operation in the subframe period SF(1), the selection signal SL1 output for selection at the time of signal readout of the charge readout regions 22₁ and 22₂ of one group is sequentially turned on for each row, and at the same time, the reset signal RT1 for resetting the charges of the charge readout regions 22₁ and 22₂ is sequentially turned on for each row at the timing after the selection signal SL1 is turned on.

In addition, in a period T_{EX2} of the exposure operation in the subframe period SF(2) parallel to the subframe period SF(1), the control pulses G(3) and G(4) for exposure operation control of the charge readout regions 22₃ and 22₄ of the other group are repeatedly turned on so as to set the delay periods for the pulsed light L_{P} to be constant. Specifically, the control pulse G(3) is set to a timing specified by the reference numeral W₃, and the control pulse G(4) is set to a timing specified by the reference numeral W₄. In the subsequent period P_{R} of the signal readout operation in the subframe period SF(2), the selection signal SL2 output for selection at the time of signal readout of the charge readout regions 22₃ and 22₄ of the other group is sequentially turned on for each row, and at the same time, the reset signal RT2 for resetting the charges of the charge readout regions 22₃ and 22₄ is sequentially turned on for each row at the timing after the selection signal SL2 is turned on.

In addition, in a period T_{EX3} of the exposure operation in the subframe period SF(3) subsequent to the subframe period SF(1), the control pulses G(1) and G(2) for exposure operation control of the charge readout regions 22₁ and 22₂ of one group are repeatedly turned on so as to set the delay periods for the pulsed light L_{P} to be constant. Specifically, the control pulse G(1) is set to a timing specified by the reference numeral W₇, and the control pulse G(2) is set to a timing specified by the reference numeral W₈. In the subsequent period P_{R} of the signal readout operation in the subframe period SF(3), the signal readout operation is executed in the same manner as the control in the subframe period SF(1). In addition, also in the subframe period SF(4) subsequent to the subframe period SF(2), the exposure operation and the signal readout operation are controlled similarly to the control in the subframe period SF(2), and the delay periods of the control pulses G(3) and G(4) at the time of the exposure operation are respectively set to periods specified by the reference numerals W₅ and W₆.

Note that, in the control described above, lengths T_{EX1} to T_{EX4} of the periods of the exposure operation in the subframe periods SF(1) to SF(4) are set to different periods corresponding to lengths of the delay periods of the control pulses G(1) to G(4) set in the respective kinds of exposure operation, and the subframe period is set to be longer as the delay period is longer. For example, in the example of the delay periods indicated in FIG. 6, the delay period in the subframe period SF(2) is longer than the delay period in the subframe period SF(1) by about twice the duration T₁, the delay period in the subframe period SF(4) is longer than the delay period in the subframe period SF(2) by about twice the duration T₁, and the delay period in the subframe period SF(3) is longer than the delay period in the subframe period SF(4) by about twice the duration T₁. In consideration of this, the subframe periods SF(1), SF(2), SF(4), and SF(3) are set to be longer in this order, and specifically, T_{EX1} : T_{EX2} : T_{EX4} : T_{EX3} = 1 : 4 : 9 : 16 is set.

Next, a function of distance calculation in the arithmetic circuit 17 will be described, and a distance image measuring method of the present embodiment will be described in detail.

First, if distance image generation processing by the distance image sensor 10 is started, timings of the control pulses G(1) to G(4) and the pulsed light L_{P} in the subframe periods SF(1) to SF(4) within one frame period are set by the light source driver 31 and the pixel driver 32 (a light source control step and a charge transfer control step). Specifically, in each of the subframe periods SF(1) to SF(4), the delay periods of the control pulses G(1) to G(4) to be controlled for each group of the charge readout regions 22₁ to 22₄ are maintained constant, the delay periods of the control pulses G(1) to G(4) to be controlled are set to different periods between the subframe periods SF(1) to SF(4), and the lengths of the subframe periods SF(1) to SF(4) are set so as to become longer as the delay periods of the control pulses G(1) to G(4) to be controlled become longer. In parallel with this, at the timing of the signal readout operation in each of the subframe periods SF(1) to SF(4), the detection signals are read out from the charge readout regions 22₁ to 22₄ for each row of the pixel circuits 13 by the signal readout circuit 15 via the voltage detection units 26₁ to 26₄ of the respective pixel circuits 13, and the detection signals are converted into digital values and then output to the arithmetic circuit 17 (signal readout step). In this event, the detection signals are read out in parallel from the two charge readout regions 22₁ and 22₂ or the two charge readout regions 22₃ and 22₄ belonging to the group to be controlled at different timings for each of the subframe periods SF(1) to SF(4) by the signal readout circuit 15.

Next, based on the detection signals output from the respective pixel circuits 13 during one frame period, the arithmetic circuit 17 calculates distance information for each pixel in units of one frame period (distance calculation step). However, the arithmetic circuit 17 may calculate the distance information by averaging calculation results for each of a plurality of frame periods.

In other words, based on the detection signals S₁⁽¹⁾ and S₂⁽¹⁾ from the charge readout regions 22₁ and 22₂ obtained by the signal readout operation in the subframe period SF(1), the detection signals S₃⁽¹⁾ and S₄⁽¹⁾ from the charge readout regions 22₃ and 22₄ obtained by the signal readout operation in the subframe period SF(2), the detection signals S₁⁽²⁾ and S₂⁽²⁾ from the charge readout regions 22₁ and 22₂ obtained by the signal readout operation in the subframe period SF(3), and the detection signals S₃⁽²⁾ and S₄⁽²⁾ from the charge readout regions 22₃ and 22₄ obtained by the signal readout operation in the subframe period SF(4), the arithmetic circuit 17 calculates difference values S₁₋₃⁽¹⁾ and S₂₋₄⁽¹⁾ and difference values S₁₋₃⁽²⁾ and S₂₋₄⁽²⁾ using the following Formula (1) to Formula (4). These calculation formulas also include weighting calculation according to the lengths of the subframe periods SF(1) to SF(4), that is, the number of applied control pulses G(1) to G(4). ${{S}_{1 - 3}}^{\left(1\right)} = 16 \times \left\{\left(1/1\right)\times {{S}_{1}}^{\left(1\right)}-\left(1/4\right){{S}_{3}}^{\left(1\right)}\right\}$ ${{S}_{2 - 4}}^{\left(1\right)} = 16 \times \left\{\left(1/1\right)\times {{S}_{2}}^{\left(1\right)}-\left(1/4\right){{S}_{4}}^{\left(1\right)}\right\}$ ${{S}_{1 - 3}}^{\left(2\right)} = - 16 \times \left\{\left(1/16\right)\times {{S}_{1}}^{\left(2\right)}-\left(1/9\right){{S}_{3}}^{\left(2\right)}\right\}$ ${{S}_{2 - 4}}^{\left(2\right)} = - 16 \times \left\{\left(1/16\right)\times {{S}_{2}}^{\left(2\right)}-\left(1/9\right){{S}_{4}}^{\left(2\right)}\right\}$

Thereafter, the arithmetic circuit 17 calculates distance information using a calculation method disclosed in WO 2019/078366 A. Specifically, the arithmetic circuit 17 calculates values of distance data validity determination signals S_{A}⁽¹⁾ and S_{A}⁽²⁾ using the following Formulas (5) and (6) based on the difference values S₁₋₃⁽¹⁾, S₂₋₄⁽¹⁾, S₁₋₃⁽²⁾, and S₂₋₄⁽²⁾. ${{S}_{A}}^{\left(1\right)} = \left|{{S}_{1 - 3}}^{\left(1\right)}\right| + \left|{{S}_{2 - 4}}^{\left(1\right)}\right|$ ${{S}_{A}}^{\left(2\right)} = \left|{{S}_{1 - 3}}^{\left(2\right)}\right| + \left|{{S}_{2 - 4}}^{\left(2\right)}\right|$

Then, it is determined whether or not the distance calculation using the respective detection signals S₁⁽¹⁾ to S₄⁽¹⁾ and S₁⁽²⁾ to S₄⁽²⁾ is valid by determining whether or not the values of the respective distance data validity determination signals S_{A}⁽¹⁾ and S_{A}⁽²⁾ exceed a threshold Th₁.

Further, the arithmetic circuit 17 calculates values of a first distance calculation reference signal X_{R}⁽¹⁾ and a second distance calculation reference signal Y_{R}⁽¹⁾ using the following Formulas (7) and (8). ${{X}_{R}}^{\left(1\right)} = 1 - {{S}_{1 - 3}}^{\left(1\right)} / {{S}_{A}}^{\left(1\right)}$ ${{Y}_{R}}^{\left(1\right)} = 2 - {{S}_{2 - 4}}^{\left(1\right)} {{/S}_{A}}^{\left(1\right)}$

In addition, the arithmetic circuit 17 calculates values of distance calculation reference signals X_{R}^{(B)}, Y_{R}^{(B)}, X_{R}⁽²⁾, and Y_{R}⁽²⁾ using the following Formulas (9) to (12). ${{X}_{R}}^{\left(B\right)} = 3 + \left({{S}_{1 - 3}}^{\left(1\right)}+{{S}_{1 - 3}}^{\left(2\right)}\right) / \left({{S}_{A}}^{\left(1\right)}+{{S}_{A}}^{\left(2\right)}\right)$ ${{Y}_{R}}^{\left(B\right)} = 4 + \left({{S}_{2 - 4}}^{\left(1\right)}+{{S}_{2 - 4}}^{\left(2\right)}\right) / \left({{S}_{A}}^{\left(1\right)}+{{S}_{A}}^{\left(2\right)}\right)$ ${{X}_{R}}^{\left(2\right)} = 5 - {{S}_{1 - 3}}^{\left(2\right)} / {{S}_{A}}^{\left(2\right)}$ ${{Y}_{R}}^{\left(2\right)} = 6 - {{S}_{2 - 4}}^{\left(2\right)} / {{S}_{A}}^{\left(2\right)}$

Next, the arithmetic circuit 17 selects a value to be referred to for distance calculation from among the distance calculation reference signals X_{R}⁽¹⁾, X_{R}^{(B)}, and X_{R}⁽²⁾ and the distance calculation reference signals Y_{R}⁽¹⁾, Y_{R}^{(B)}, and Y_{R}⁽²⁾. For example, in a case where the value of the distance data validity determination signal S_{A}⁽¹⁾ is equal to or greater than the threshold Th₁, one of the distance calculation reference signals X_{R}⁽¹⁾ and Y_{R}⁽¹⁾ is selected according to the values of the distance calculation reference signals X_{R}⁽¹⁾ and Y_{R}⁽¹⁾. In a case where the value of the distance data validity determination signal S_{A}⁽²⁾ is equal to or greater than the threshold Th₁, one of the distance calculation reference signals X_{R}⁽²⁾ and Y_{R}⁽²⁾ is selected according to the values of the distance calculation reference signals X_{R}⁽²⁾ and Y_{R}⁽²⁾. Furthermore, in a case where the value of any one of the distance data validity determination signals S_{A}⁽¹⁾ and S_{A}⁽²⁾ is equal to or greater than the threshold Th₁, and in a case where no value is selected from the distance calculation reference signals X_{R}⁽¹⁾ and X_{R}⁽²⁾ and the distance calculation reference signals Y_{R}⁽¹⁾ and Y_{R}⁽²⁾, one of the distance calculation reference signals X_{R}^{(B)} and Y_{R}^{(B)} is selected according to the values of the distance calculation reference signals X_{R}^{(B)} and Y_{R}^{(B)}.

Finally, a distance of the object S is calculated by the arithmetic circuit 17 based on the distance calculation reference signals X_{R}⁽¹⁾, X_{R}^{(B)}, X_{R}⁽²⁾, Y_{R}⁽¹⁾, Y_{R}^{(B)}, and Y_{R}⁽²⁾ selected with respect to the corresponding pixel, the calculation result is reflected in the distance information of the corresponding pixel, and the distance image including the distance information of each pixel is generated and output.

According to the distance image sensor 10 of the above embodiment, the pulsed light L_{P} is periodically and repeatedly generated from the light source 11 within the periodic frame period T_{F}, and time windows for the first to the fourth charge readout regions 22₁ to 22₄ are set within the frame period T_{F} while being delayed from the generation of the pulsed light L_{P}, and charges are transferred from the photoelectric conversion region 21 of the pixel circuit 13 to the first to the fourth charge readout regions 22₁ to 22₄ within the respective time windows. Furthermore, detection signals corresponding to the first to the fourth charge amounts accumulated in the first to the fourth charge readout regions 22₁ to 22₄ are read out from the first to the fourth charge readout regions 22₁ to 22₄ of the pixel circuit 13. In this event, the detection signals are read out at different timings for each group of the charge readout regions 22₁ to 22₄ divided into two. As a result, the detection signals can be read out at different timings between one group of the charge readout regions 22₁ to 22₄ for which a time window corresponding to a timing of reflected light L_{R} of pulsed light L_{P} generated at a short distance is set and the other group of the charge readout regions 22₁ to 22₄ for which a time window corresponding to a timing of reflected light L_{R} of pulsed light L_{P} generated at a long distance is set, and the exposure period of the reflected light L_{R} can be changed between the two groups of the charge readout regions 22₁ to 22₄ within the limited frame period T_{F}. In particular, the period of the signal readout operation of a certain group can be set to the period of the exposure operation of another group, so that the period of the exposure operation for each group can be lengthened. This results in making it possible to generate an image signal with improved distance resolution even in a case where the object S in a wide distance range is to be measured.

Here, the pixel driver 32 performs control so as to maintain substantially constant delay periods with respect to the generation timing of the pulsed light L_{P} of the control pulses G(1) to G(4) to be applied corresponding to the group of the charge readout regions 22₁ to 22₄ within the subframe periods SF(1) to SF(4) sandwiched between the timings of the signal readout processing of the two groups obtained by dividing the charge readout regions 22₁ to 22₄ into two. According to such a configuration, the detection signals are read out from the respective groups of the charge readout regions 22₁ to 22₄ after an elapse the subframe periods SF(1) to SF(4) for which the delay periods with respect to the timings of the pulsed light L_{P} are set to be substantially constant. As a result, by changing the exposure periods of the reflected light L_{R} among the groups of the charge readout regions 22₁ to 22₄, an exposure period according to a distance to be measured can be set, so that distance resolution can be further improved.

Furthermore, the signal readout circuit 15 includes a plurality of wiring portions L3 electrically connected to the plurality of charge readout regions 22₁ to 22₄ included in the groups of the charge readout regions 22₁ to 22₄ divided into two via switches, and is configured to read out detection signals in parallel from the plurality of charge readout regions 22₁ to 22₄ via the plurality of wiring portions L3 by turning on the switches at the signal readout timings. In a case of such a configuration, the detection signals can be read out in parallel from the respective groups of the charge readout regions 22₁ to 22₄ divided into two, so that efficiency of the signal readout operation can be improved. This results in making it possible to secure the exposure period of the reflected light L_{R} within the limited frame period T_{F}, so that an image signal with further improved distance resolution can be generated.

Furthermore, the pixel driver 32 sets the delay periods of the control pulses G(1) to G(4) to different periods between the groups of the charge readout regions 22₁ to 22₄ divided into two, and the signal readout circuit 15 sets the timings of the signal readout operation for each group of the charge readout regions divided into two such that the lengths of the subframe periods SF(1) to SF(4) increase as the delay periods increase. According to such a configuration, the exposure period of one group of the charge readout regions 22₁ to 22₄ for which a time window corresponding to a timing of reflected light L_{R} of pulsed light L_{P} generated at a long distance is set can be made longer than the exposure period of the other group of the charge readout regions 22₁ to 22₄ for which a time window corresponding to a timing of reflected light L_{R} of pulsed light L_{P} generated at a short distance is set. This results in making it possible to generate an image signal with further improved distance resolution even in a case where the object S in a wide distance range is to be measured.

Furthermore, the distance image sensor 10 according to the above embodiment includes a plurality of pixel circuits 13 arranged in a plurality of rows, and the signal readout circuit 15 performs control such that charge accumulation periods of the first to the fourth charge readout regions 22₁ to 22₄ coincide with each other between rows of the plurality of pixel circuits 13. By adopting such a configuration, two-dimensional distance information can be obtained without distortion.

Furthermore, in the above configuration, the signal readout circuit 15 performs control to shift timings of the signal readout operation for each group of the charge readout regions 22₁ to 22₄ between the rows of the plurality of pixel circuits 13. In this case, the signal readout circuit 15 can be shared among the rows of the plurality of pixel circuits 13, so that the configuration of the distance image sensor 10 can be simplified.

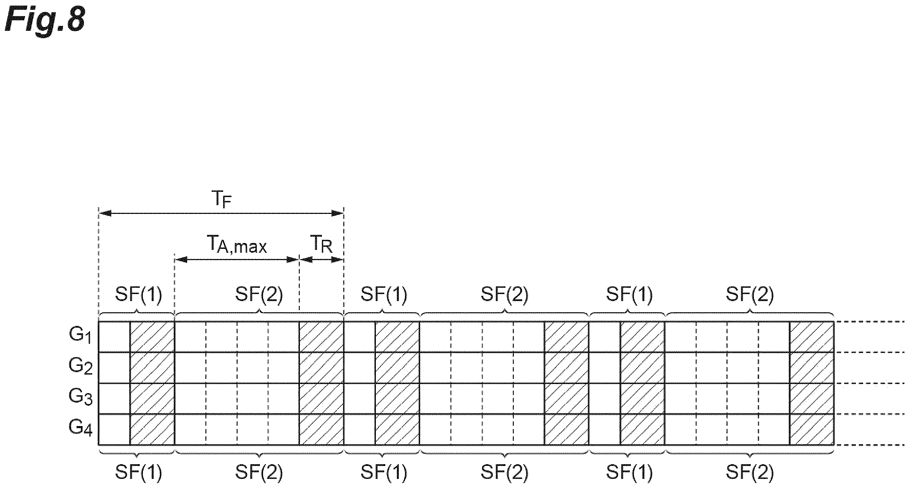

Here, the effects of improving the distance resolution of the distance image sensor 10 of the present embodiment will be specifically described. FIG. 8 indicates timings of exposure operation and signal readout operation for each subframe period to be controlled by a distance image sensor according to a comparative example. This comparative example has a configuration similar to that of the pixel circuit 13 of the above embodiment, and one frame period T_{F} is divided into two subframe periods SF(1) and SF(2), and a timing of the signal readout operation (corresponding to the rectangular block indicated by hatching) is set at the end of each of the subframe periods SF(1) and SF(2). However, in the comparative example, it is assumed that the delay periods of the control pulses G(1) to G(4) are set to be constant at the timings of the exposure operation (corresponding to the rectangular block indicated by white) in the subframe periods SF(1) and SF(2), and in the signal readout operation, the operation is performed so as to read out every two detection signals in parallel from the charge readout regions 22₁ to 22₄ at the same timings of the signal readout operation. Here, assuming that a period of the exposure operation in the subframe period SF(1) is T_{A0}, a period of the exposure operation in the subframe period SF(2) is T_{A,max} = 4 × T_{A0}, and the period T_{R} of the signal readout operation is T_{R} = (1/f_{M}) × T_{F} (f_{M} is a coefficient indicating performance of the signal readout operation), the following formula holds. ${T}_{F} = 2 \times {T}_{R} + \left(1+4\right) \times {T}_{A 0}$

From this formula, a ratio of the period of the exposure operation in the subframe period SF(2) to the one frame period T_{F} can be expressed by the following formula; ${T}_{A , max} / {T}_{F} = 4 \times \left({f}_{M}-2\right) / \left\{\left(1+4\right)\times {f}_{M}\right\} , and$ and in a case where the coefficient f_{M} = 8, T_{A,max}/T_{F} is calculated as T_{A,max}/T_{F} = 0.6.

Next, a ratio of the period T_{A,max} of the exposure operation in the subframe period SF(3) in the present embodiment is calculated on the premise of a control state indicated in FIG. 5. In the present embodiment, the group of the charge readout regions 22₁ to 22₄ is targeted in one signal readout operation, and thus, the period T_{R} of the signal readout operation is estimated as T_{R} = {1/(2 × f_{M})} × T_{F}, and as described above, the period T_{A,max} of the exposure operation in the subframe period SF(3) is estimated as T_{A,max} = 16 × T_{A0}. From this premise, the following formula; ${T}_{F} = 2 \times {T}_{R} + \left(2+16\right) \times {T}_{A 0}$
is satisfied, and the following formula; ${T}_{A , max} / {T}_{F} = 16 \times \left({f}_{M}-1\right) / \left\{\left(2+16\right)\times {f}_{M}\right\}$
is derived. As a result, in the present embodiment, in a case where the coefficient f_{M} = 8, T_{A,max} is calculated as T_{A,max}/T_{F} = 0.78. From this calculation result, it can be seen that in the distance image sensor 10 of the present embodiment, the period of the exposure operation for the object S at a long distance is efficiently secured, and the effect of improving the distance resolution is expected.

Note that the present invention is not limited to the aspects of the above-described embodiment.

In the above-described embodiment, four charge readout regions 22₁ to 22₄ are provided in the pixel circuit 13, but any number of charge readout regions (hereinafter, a configuration of M₁ (M₁ is an integer equal to or greater than 2) charge readout regions is also referred to as a "M₁ tap") may be provided as long as the number is two or more. In that case, the control electrodes and the voltage detection units are provided corresponding to the number M₁ of charge readout regions, the pixel driver 32 generates the first to the M₁-th control pulses G(1) to G(M₁) corresponding to the number M₁ of the control electrodes, the signal readout circuit 15 reads out the first to the M₁-th detection signals from the charge readout regions, and the arithmetic circuit 17 calculates distance information based on the first to the M₁-th detection signals read out from the respective charge readout regions by the signal readout circuit 15.

Hereinafter, a configuration of a modification having a 6-tap configuration will be described.

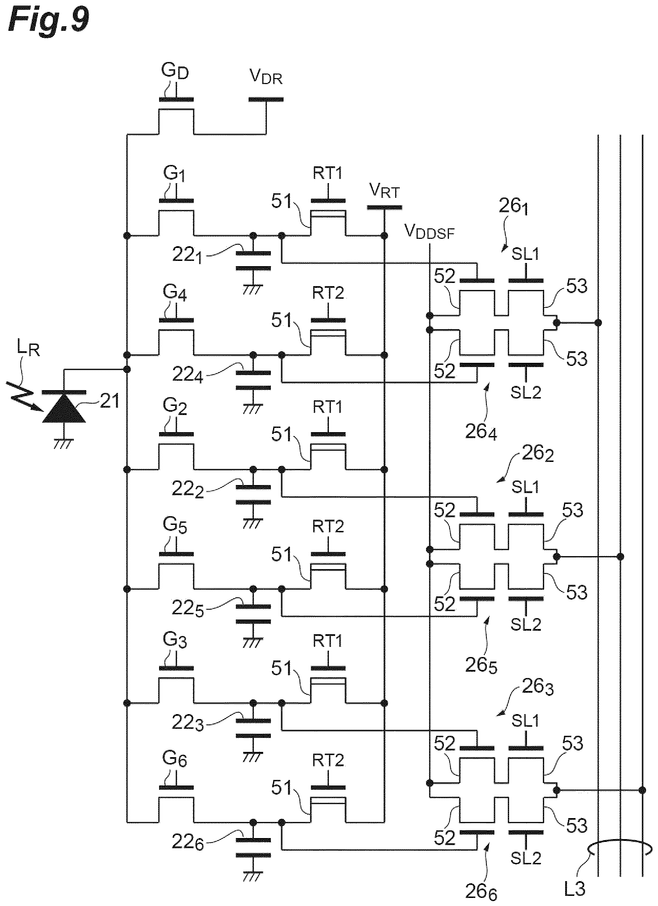

FIG. 9 is a circuit diagram illustrating a detailed configuration of the pixel circuit 13 of the modification having the 6-tap configuration. In the present modification, the pixel circuit 13 is provided with the first to the sixth charge readout regions 22₁ to 22₆, the first to the sixth control electrodes G₁ to G₆, and the first to the sixth voltage detection units 26₁ to 26₆. Then, the first to the sixth charge readout regions 22₁ to 22₆ are grouped into two groups of the first to the third charge readout regions 22₁ to 22₃ and the fourth to the sixth charge readout regions 22₄ to 22₆, the first to the third charge readout regions 22₁ to 22₃ are connected in parallel to the three wiring portions L3 via the first to the third voltage detection units 26₁ to 26₃, respectively, and the fourth to the sixth charge readout regions 22₄ to 22₆ are connected in parallel to the three wiring portions L3 via the fourth to the sixth voltage detection units 26₄ to 26₆, respectively. The pixel driver 32 of the present modification performs control so as to maintain the delay periods of the first to the sixth control pulses G(1) to G(6) within the subframe period substantially constant for each group of the charge readout regions 22₁ to 22₆, similarly to the above-described embodiment. In addition, similarly to the above-described embodiment, the signal readout circuit 15 sets a period of exposure operation for each group of the charge readout regions 22₁ to 22₆ in the subframe period, and sets a timing of parallel signal readout operation for each group of the charge readout regions 22₁ to 22₆ in the subframe period.

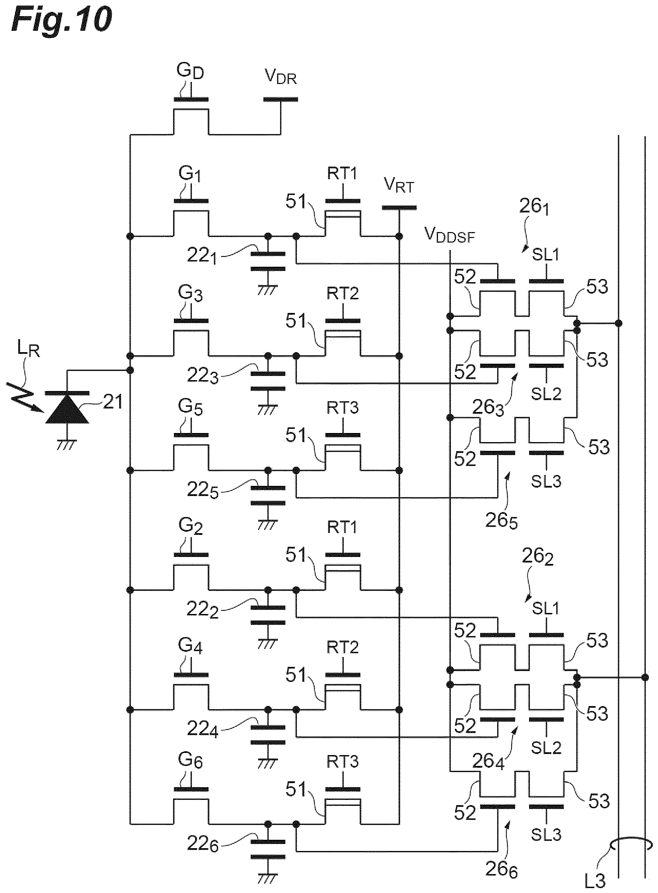

Furthermore, in the present modification, the first to the sixth charge readout regions 22₁ to 22₆ may be divided into three groups as in the configuration illustrated in FIG. 10. In a case of this configuration, the first to the sixth charge readout regions 22₁ to 22₆ are grouped into three groups: the first and the second charge readout regions 22₁ and 22₂, the third and the fourth charge readout regions 22₃ and 22₄, and the fifth and the sixth charge readout regions 22₅ and 22₆. In addition, the first and the second charge readout regions 22₁ and 22₂ are connected in parallel to the two wiring portions L3 respectively via the first and the second voltage detection units 26₁ and 26₂, the third and the fourth charge readout regions 22₃ and 22₄ are connected in parallel to the two wiring portions L3 respectively via the third and the fourth voltage detection units 26₃ and 26₄, and the fifth and the sixth charge readout regions 22₅ and 22₆ are connected in parallel to the two wiring portions L3 respectively via the fifth and the sixth voltage detection units 26₅ and 26₆.

Next, a configuration of another modification having a 3-tap configuration will be described.

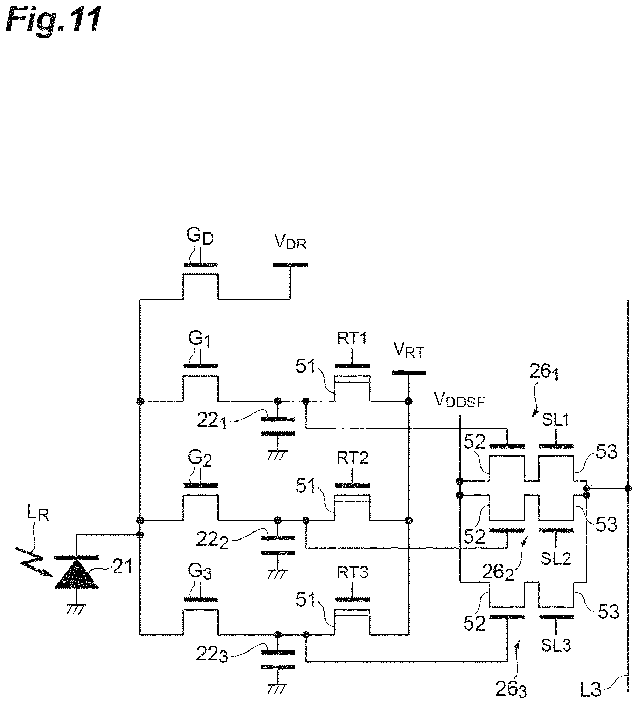

FIG. 11 is a circuit diagram illustrating a detailed configuration of the pixel circuit 13 of another modification having the 3-tap configuration. In the present modification, the pixel circuit 13 is provided with the first to the third charge readout regions 22₁ to 22₃, the first to the third control electrodes G₁ to G₃, and the first to the third voltage detection units 26₁ to 26₃. Then, the first to the third charge readout regions 22₁ to 22₃ are grouped into three groups: the first charge readout region 22₁, the second charge readout region 22₂, and the third charge readout region 22₃, and the first to the third charge readout regions 22₁ to 22₃ are connected to one wiring portion L3 respectively via the first to the third voltage detection units 26₁ to 26₃. Similarly to the above-described embodiment, the pixel driver 32 of the present modification performs control so as to maintain delay periods of the first to the third control pulses G(1) to G(3) within the subframe period substantially constant for each group of the charge readout regions 22₁ to 22₃. In addition, similarly to the above-described embodiment, the signal readout circuit 15 sets a period of exposure operation for each group of the charge readout regions 22₁ to 22₃ in the subframe period and sets a timing of signal readout operation for each group of the charge readout regions 22₁ to 22₃ in the subframe period.

Even in the above-described three modifications, it is possible to generate an image signal with improved distance resolution even in a case where the object S in a wide distance range is to be measured.

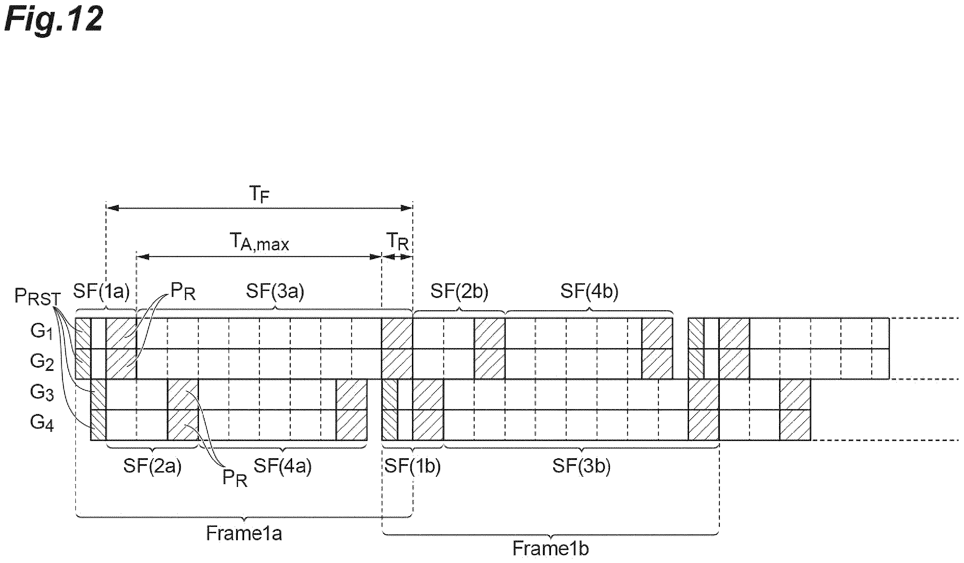

Furthermore, the distance image sensor 10 according to the above-described embodiment may perform control such that control timings are exchanged between groups of the charge readout regions in two consecutive one frame periods. FIG. 12 indicates timings of the exposure operation and the signal readout operation for each subframe period to be controlled by the distance image sensor according to the modification.

In the present modification, in a certain one frame period Frame 1a, the pixel driver 32 and the signal readout circuit 15 set timings of the exposure operation and the signal readout operation for one group including the charge readout regions 22₁ and 22₂ and the other group including the charge readout regions 22₃ and 22₄ in the subframe periods SF(1a) to SF(4a), similarly to the above-described embodiment. Here, in one frame period Frame1b immediately after one frame period Frame1a, the pixel driver 32 and the signal readout circuit 15 of the present modification exchange setting targets of respective timings in the subframe periods SF(1b) to SF(4b) between the one group including the charge readout regions 22₁ and 22₂ and the other group including the charge readout regions 22₃ and 22₄. In other words, the pixel driver 32 exchanges setting of the delay periods of the control pulses G(1) and G(2) set for the one group including the charge readout regions 22₁ and 22₂ and setting of the delay periods of the control pulses G(3) and G(4) set for the other group including the charge readout regions 22₃ and 22₄. In addition, the signal readout circuit 15 exchanges setting of the timing of the signal readout operation for the one group including the charge readout regions 22₁ and 22₂ and setting of the timing of the signal readout operation for the other group including the charge readout regions 22₃ and 22₄. Note that the pixel driver 32 and the signal readout circuit 15 set a first subframe period SF(1b) of the frame period Frame1b to a timing overlapping with the last subframe period SF(3a) of the frame period Frame1a. This makes it possible to more efficiently secure a period of the exposure operation.

A calculation function of distance information of the arithmetic circuit 17 in the above modification will be described.

First, the arithmetic circuit 17 calculates difference values S₁₋₃⁽¹⁾ (Frame1a), S₂₋₄⁽¹⁾ (Frame1a), S₁₋₃⁽²⁾ (Frame1a), and S₂₋₄⁽²⁾ (Frame1a) based on detection signals S₁⁽¹⁾ to S₄⁽¹⁾ and S₁⁽²⁾ to S₄⁽²⁾ acquired by the signal readout operation in a certain one frame period Frame1a, similarly to the above embodiment. Further, the arithmetic circuit 17 calculates difference values S₁₋₃⁽¹⁾ (Frame1b), S₂₋₄⁽¹⁾ (Frame1b), S₁₋₃⁽²⁾ (Frame1b), and S₂₋₄⁽²⁾ (Frame1b) by using the following Formulas (13) to (16) based on detection signals S₁⁽¹⁾ to S₄⁽¹⁾ and S₁⁽²⁾ to S₄⁽²⁾ acquired by the signal readout operation in the immediately following one frame period Frame1b. ${{S}_{1 - 3}}^{\left(1\right)} = - 16 \times \left\{\left(1/4\right)\times {{S}_{1}}^{\left(1\right)}-\left(1/1\right){{S}_{3}}^{\left(1\right)}\right\}$ ${{S}_{2 - 4}}^{\left(1\right)} = - 16 \times \left\{\left(1/4\right)\times {{S}_{2}}^{\left(1\right)}-\left(1/1\right){{S}_{4}}^{\left(1\right)}\right\}$ ${{S}_{1 - 3}}^{\left(2\right)} = 16 \times \left\{\left(1/9\right)\times {{S}_{1}}^{\left(2\right)}-\left(1/16\right){{S}_{3}}^{\left(2\right)}\right\}$ ${{S}_{2 - 4}}^{\left(2\right)} = 16 \times \left\{\left(1/9\right)\times {{S}_{2}}^{\left(2\right)}-\left(1/16\right){{S}_{4}}^{\left(2\right)}\right\}$

Then, the arithmetic circuit 17 calculates a moving average of the difference values between the two frame periods Frame1a and Frame1b by the following Formulas (17) to (20). ${{S}_{1 - 3}}^{\left(1\right)} = \left\{{{S}_{1 - 3}}^{\left(1\right)}\left(Frame1a\right)+{{S}_{1 - 3}}^{\left(1\right)}\left(Frame1b\right)\right\} / 2$ ${{S}_{2 - 4}}^{\left(1\right)} = \left\{{{S}_{2 - 4}}^{\left(1\right)}\left(Frame1a\right)+{{S}_{2 - 4}}^{\left(1\right)}\left(Frame1b\right)\right\} / 2$ ${{S}_{1 - 3}}^{\left(2\right)} = \left\{{{S}_{1 - 3}}^{\left(2\right)}\left(Frame1a\right)+{{S}_{1 - 3}}^{\left(2\right)}\left(Frame1b\right)\right\} / 2$ ${{S}_{2 - 4}}^{\left(2\right)} = \left\{{{S}_{2 - 4}}^{\left(2\right)}\left(Frame1a\right)+{{S}_{2 - 4}}^{\left(2\right)}\left(Frame1b\right)\right\} / 2$

Further, similarly to the above embodiment, the arithmetic circuit 17 calculates a distance based on the moving average of the four difference values for each frame period and generates a distance image including distance information reflecting the distance.

Also in the present modification, it is possible to generate an image signal with improved distance resolution even in a case where the object S in a wide distance range is to be measured. Specifically, in the present modification, in a case where the coefficient f_{M} = 8, a ratio of the exposure period in the subframe period SF(3a) is estimated to be T_{A,max}/T_{F} = 0.88, and a ratio of the exposure period is largely secured. Furthermore, in the present modification, the distance is calculated by the moving average during the frame period, so that it is possible to cancel or reduce influence of nonlinear variation in a gain between the plurality of pixel circuits 13 that outputs the detection signals.

Furthermore, in the above-described embodiment, in the pixel driver 32 and the signal readout circuit 15, the subframe period is set for each group of the charge readout regions of the pixel circuit 13. On the other hand, the pixel driver 32 and the signal readout circuit 15 according to the modification may divide the pixel circuits 13 of N rows into groups in units of rows and further allocate different subframe periods to each of the divided row groups.

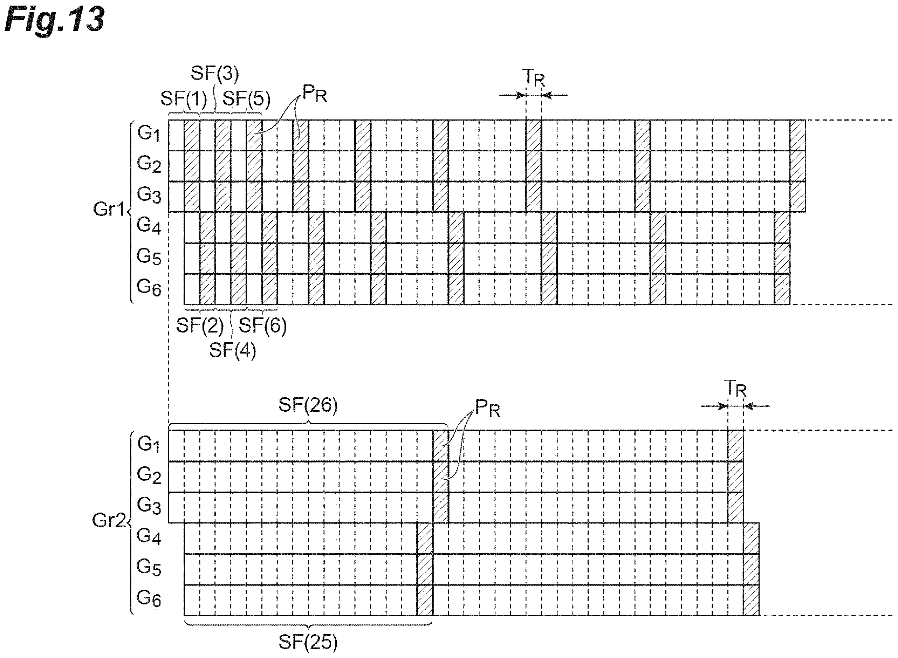

FIG. 13 is a view indicating timings of exposure operation and timings of signal readout operation for each subframe period obtained by temporally dividing a frame period in the present modification. In the present modification, the pixel driver 32 and the signal readout circuit 15 allocate different subframe periods to the group of the charge readout regions for each of the group Gr1 of the pixel circuits 13 in the odd rows and the group Gr2 of the pixel circuits 13 in the even rows, and set periods T_{R} of the signal readout operation at different timings at the ends of the subframe periods for each of the groups Gr1 and Gr2. Specifically, subframe periods SF(1), SF(3), and SF(5) are set for the charge readout regions 22₁ to 22₃ of the pixel circuits 13 belonging to the group Gr1, and subframe periods SF(2), SF(4), and SF(6) are set for the charge readout regions 22₄ to 22₆ of the pixel circuits 13 belonging to the group Gr1 in parallel to the subframe periods SF(1), SF(3), and SF(5). At the same time, a subframe period SF(26) is set for the charge readout regions 22₁ to 22₃ of the pixel circuits 13 belonging to the group Gr2, and in parallel to the subframe period SF(26), a subframe period SF(25) is set for the charge readout regions 22₄ to 22₆ of the pixel circuits 13 belonging to the group Gr2. According to such an example, for example, a total of 32 subframe periods can be set within one frame period for even rows and odd rows. In order to implement such a function of the modification, there is provided a selection circuit that selects consecutive control pulses G(1) to G(6) and G(D) to be applied from the pixel driver 32 to the pixel circuits 13 of each row at a desired timing within a subframe period for each of the row groups Gr1 and Gr2 and applies the selected control pulses to the control electrodes G₁ to G₆ and G_{D}. Furthermore, the pixel driver 32 and the signal readout circuit 15 may operate to exchange setting of the subframe period for each of the row groups Gr1 and Gr2 as indicated in FIG. 13 between two consecutive frame periods.

According to such a modification, the exposure period can be more efficiently changed within a limited frame period. As a result, it becomes easy to generate an image signal with improved distance resolution.

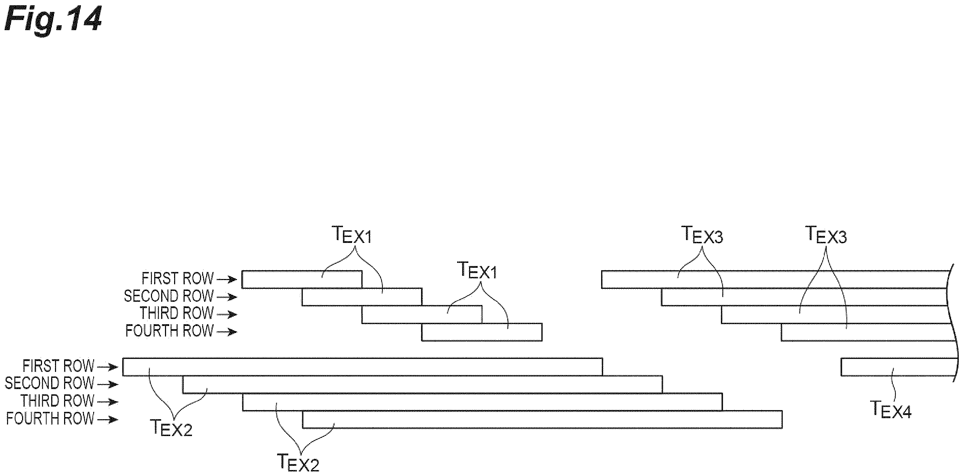

Furthermore, in the above-described embodiment, the pixel driver 32 performs control to perform so-called global exposure so that charge accumulation periods of the first to the fourth charge readout regions 22₁ to 22₄ coincide with each other between the rows of the plurality of pixel circuits 13. In another embodiment, the pixel driver 32 may perform control so as to perform so-called rolling exposure so as to sequentially shift the accumulation periods of the first to the fourth charge readout regions 22₁ to 22₄ between the rows of the plurality of pixel circuits 13 every constant period. FIG. 14 indicates timings of the period of the exposure operation in each row of the pixel circuits 13 in a case where control by the pixel driver 32 indicated in FIG. 5 and FIG. 6 is set so that rolling exposure is performed. In FIG. 14, a horizontal direction corresponds to an elapse of time, and the timings of the exposure period of each row of the pixel circuits are indicated in the vertical direction. As described above, control is performed such that a period T_{EX1} of the exposure operation in the subframe period SF(1) is sequentially shifted between the pixel circuits 13 in the first to the fourth consecutive rows every certain period. Similarly, periods T_{EX2} and T_{EX3} of the exposure operation in the subframe periods SF(2) and SF(3) are also controlled to be sequentially shifted between the pixel circuits 13 in the first to the fourth consecutive rows every certain period. By adopting such a configuration, it is possible to shorten a waiting period from the exposure operation to the signal readout operation in each row of the plurality of pixel circuits 13, reduce a dark current (noise) to be caused by leakage light in the readout detection signals, and prevent influence of parasitic sensitivity from changing for each row of the pixel circuits 13. This results in making it possible to obtain a two-dimensional image signal with less noise.

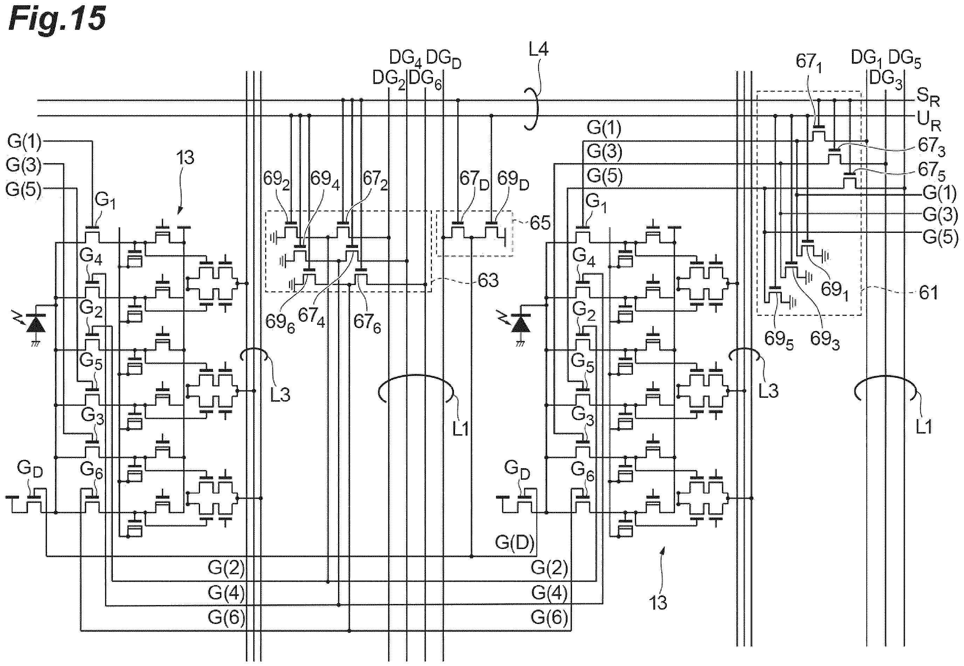

An example of a circuit configuration for implementing the exposure operation according to the modification indicated in FIG. 13 will be described. FIG. 15 extracts a circuit configuration around the pixel circuit 13 of some specific rows in the distance image sensor 10. Here, the pixel circuit 13 has a 6-tap configuration illustrated in FIG. 9. Switch circuits 61, 63, and 65 are provided in common to two adjacent pixel circuits 13 in the same row.

The switch circuit 61 includes six switch elements 67₁, 69₁, 67₃, 69₃, 67₅, and 69₅. The switch elements 67₁, 69₁, 67₃, 69₃, 67₅, and 69₅ are, for example, MOS transistors.

The switch element 67₁ is connected between the pixel driver 32 and the control electrodes G₁ of the two pixel circuits 13 for each row, has a source connected to the pixel driver 32 via the wiring portion L1, a drain connected to the control electrodes G₁ of the two pixel circuits 13, and a gate connected to the pixel driver 32 via the wiring portion L4 provided for each row. The switch element 69₁ is connected between the control electrodes G₁ of the two pixel circuits 13 and a fixed potential (in the present embodiment, the ground potential), has a drain connected to the control electrodes G₁ of the two pixel circuits 13, has a source connected to the fixed potential, and has a gate connected to the pixel driver 32 via the wiring portion L4 provided for each row. As a result of selection signals S_{R} and U_{R} that change complementarily being supplied from the pixel driver 32 to the gate of the switch element 67₁ and the gate of the switch element 69₁, either a control pulse DG₁ for the control electrode G₁ supplied from the pixel driver 32 via the wiring portion L1 or the fixed potential is selectively applied to the control electrodes G₁ of the two pixel circuits 13.

The switch elements 67₃, 69₃, 67₅, and 69₅ have a similar configuration. In other words, the switch element 67₃ is connected between the pixel driver 32 and the control electrodes G₃ of the two pixel circuits 13 for each row, and the switch element 69₃ is connected between the control electrodes G₃ of the two pixel circuits 13 and the fixed potential. The switch element 67₃ and the switch element 69₃ selectively apply either a control pulse DG₃ for the control electrode G₃ supplied from the pixel driver 32 or the fixed potential to the control electrodes G₃ of the two pixel circuits 13 based on the selection signals S_{R} and U_{R} supplied from the pixel driver 32. The switch element 67₅ is connected between the pixel driver 32 and the control electrodes G₅ of the two pixel circuits 13 for each row, and the switch element 69₅ is connected between the control electrodes G₅ of the two pixel circuits 13 and the fixed potential. The switch element 67₅ and the switch element 69₅ selectively apply either a control pulse DG₅ for the control electrode G₅ supplied from the pixel driver 32 or the fixed potential to the control electrodes G₅ of the two pixel circuits 13 based on the selection signals S_{R} and U_{R} supplied from the pixel driver 32.

The switch circuit 63 includes six switch elements 67₂, 69₂, 67₄, 69₄, 67₆, and 69₆ having a configuration similar to that of the switch circuit 61. The switch element 67₂ and the switch element 69₂ selectively apply either a control pulse DG₂ for the control electrode G₂ or the fixed potential to the control electrodes G₂ of the two pixel circuits 13 based on the selection signals S_{R} and U_{R} supplied from the pixel driver 32. The switch element 67₄ and the switch element 69₄ selectively apply either a control pulse DG₄ for the control electrode G₄ or the fixed potential to the control electrodes G₄ of the two pixel circuits 13 based on the selection signals S_{R} and U_{R} supplied from the pixel driver 32. The switch element 67₆ and the switch element 69₆ selectively apply either a control pulse DG₆ for the control electrode G₆ or the fixed potential to the control electrodes G₆ of the two pixel circuits 13 based on the selection signals S_{R} and U_{R} supplied from the pixel driver 32.

The switch circuit 65 includes two switch elements 67_{D} and 69_{D} having a configuration similar to that of the switch circuit 61. The switch element 67_{D} and the switch element 69_{D} selectively apply either a control pulse DG_{D} for the control electrode G_{D} or a fixed potential (positive potential in the present embodiment) to the control electrodes G_{D} of the two pixel circuits 13 based on the selection signals S_{R} and U_{R} supplied from the pixel driver 32.

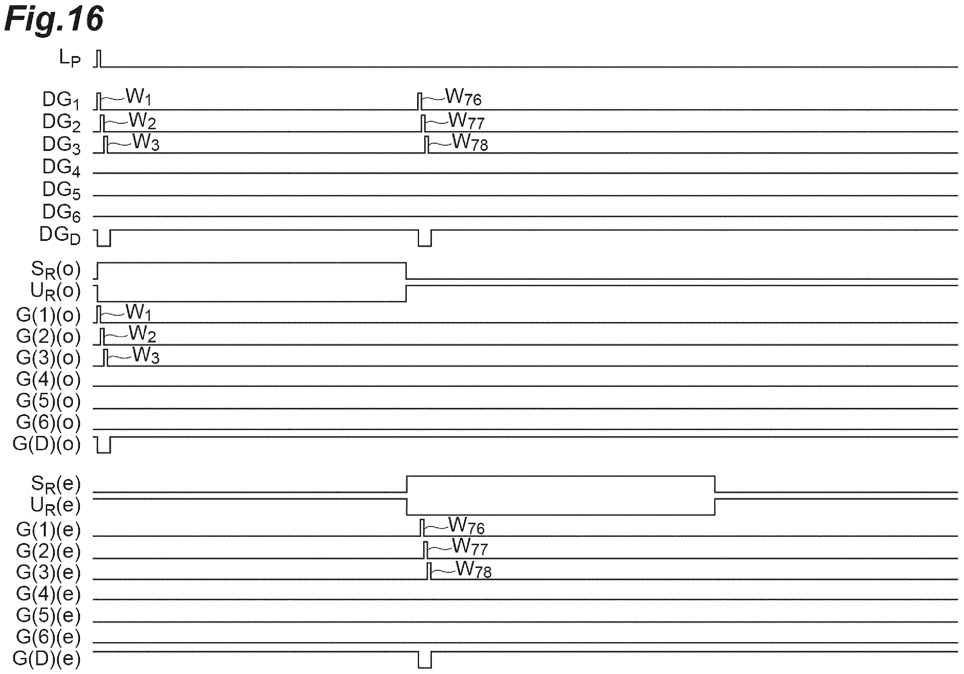

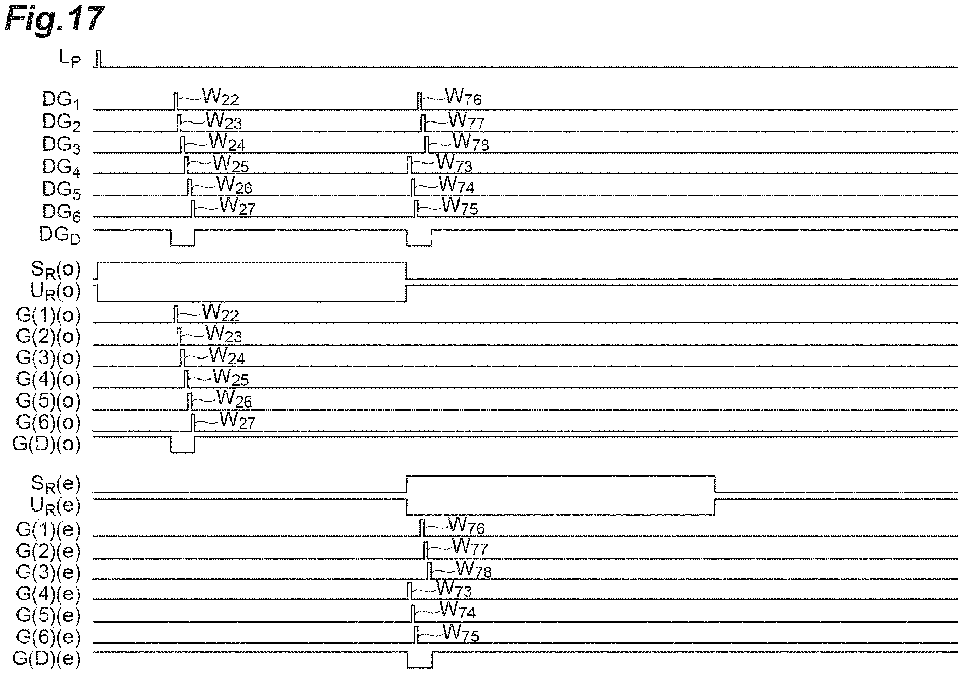

FIG. 16 and FIG. 17 are timing charts indicating control timings of the exposure operation in the above modification, FIG. 16 indicates control timings at a first generation timing of the pulsed light L_{P} periodically generated within the subframe period of the subframe period SF(1) indicated in FIG. 13, and FIG. 17 indicates control timings at the first generation timing of the pulsed light L_{P} immediately after the subframe period SF(6) indicated in FIG. 13. As the control timings, timings of control pulses DG₁ to DG₆ and DG_{D} supplied from the pixel driver 32, selection signals S_{R}(o) and U_{R}(o) supplied to the pixel circuits 13 in the odd rows, control pulses G(1)(o) to G(6)(o) and G(D)(o) applied to the pixel circuits 13 in the odd rows, selection signals S_{R}(e) and U_{R}(e) supplied to the pixel circuits 13 in the even rows, and control pulses G(1)(e) to G(6)(e) and G(D)(e) applied to the pixel circuits 13 in the odd rows are indicated.

As indicated in FIG. 16, at the first generation timing of the pulsed light L_{P} periodically generated within the subframe period of the subframe period SF(1), the control pulses DG₁ to DG₃ common between the rows supplied from the pixel driver 32 are set to be turned on at any timing specified by the reference numerals W₁ to W₃ and at any timing specified by reference numerals W₇₆ to W₇₈, respectively, and to be turned off at other timings. Furthermore, the control pulse DG_{D} common between the rows supplied from the pixel driver 32 is set to be turned off at timings including timings specified by the reference numerals W₁ to W₃ and timings including timings specified by the reference numerals W₇₆ to W₇₈, and to be turned on in other periods. In parallel with this, the selection signal S_{R}(o) set in the odd rows is turned on across the timings specified by the reference numerals W₁ to W₃, and the selection signal S_{R}(e) set in the even rows is turned on across the timings specified by the reference numerals W₇₆ to W₇₈. As a result, the control pulses G(1)(o) to G(3)(o) to be applied to the pixel circuits 13 in the odd rows are set to be turned on at the timings specified by the reference numerals W₁ to W₃, and the control pulse G(D)(o) applied to the pixel circuits 13 in the odd rows is set to be turned off at the timings including the timings specified by the reference numerals W₁ to W₃. Furthermore, the control pulses G(1)(e) to G(3)(e) to be applied to the pixel circuits 13 in the even rows are set to be turned on at the timings specified by the reference numerals W₇₆ to W₇₈, and the control pulses G(D)(e) to be applied to the pixel circuits 13 in the even rows are set to be turned off at the timings including the timings specified by reference numerals W₇₆ to W₇₈.

As indicated in FIG. 17, at the generation timing of the first pulsed light L_{P} immediately after the subframe period SF(6), the control pulses DG₁ to DG₆ common between the rows supplied from the pixel driver 32 are set to be turned on at any timing specified by reference numerals W₂₂ to W₂₇ and at any timing specified by reference numerals W₇₃ to W₇₈, respectively, and to be turned off at other timings. In addition, the control pulse DG_{D} common between the rows supplied from the pixel driver 32 is set to be turned off at timings including timings specified by the reference numerals W₂₂ to W₂₇ and timings including timings specified by the reference numerals W₇₃ to W₇₈, and to be turned on in other periods. In parallel with this, the selection signal S_{R}(o) set in the odd rows is turned on across the timings specified by the reference numerals W₂₂ to W₂₇, and the selection signal S_{R}(e) set in the even rows is turned on across the timings specified by the reference numerals W₇₃ to W₇₈. As a result, the control pulses G(1)(o) to G(6)(o) applied to the pixel circuits 13 in the odd rows are set to be turned on at the timings specified by the reference numerals W₂₂ to W₂₇, and the control pulse G(D)(o) applied to the pixel circuits 13 in the odd rows is set to be turned off at the timings including the timing specified by the reference numerals W₂₂ to W₂₇. In addition, the control pulses G(1)(e) to G(6)(e) applied to the pixel circuits 13 in the even rows are set to be turned on at timings specified by the reference numerals W₇₆ to W₇₈ and W₇₃ to W₇₅, and the control pulse G(D)(e) applied to the pixel circuits 13 in the even rows is set to be turned off at timings including timings specified by the reference numerals W₇₃ to W₇₈.

According to such a modification, the control pulses DG₁ to DG₆ and DG_{D} from the pixel driver 32 can be selectively applied for each row of the plurality of pixel circuits 13. This results in making it possible to control the charge accumulation periods of the charge readout regions for each row of the plurality of pixel circuits 13, so that it becomes easy to generate an image signal with improved distance resolution.

Here, in the above-described embodiment, the charge transfer control unit preferably maintains the delay periods of the control pulses with respect to the generation timings to be applied corresponding to the group of the charge readout regions to be substantially constant within the subframe period sandwiched between the readout timings of the respective groups of the charge readout regions divided into N. According to such a configuration, the detection signals are read out from each group of the charge readout regions after an elapse of the subframe period for which the delay periods with respect to the timing of the pulsed light are set to be substantially constant. As a result, by changing the exposure period of the reflected light among the groups of the charge readout regions, the exposure period according to the distance to be measured can be set, so that the distance resolution can be further improved.

In addition, the signal readout unit also preferably includes a plurality of signal lines respectively electrically connected to the plurality of charge readout regions included in the group of the charge readout regions divided into N via a switch, and by turning on the switch at the readout timings, preferably reads out the detection signals in parallel from the plurality of charge readout regions via the plurality of signal lines. In this case, the detection signals can be read out in parallel from each of the groups of the charge readout regions divided into N, so that efficiency of readout processing can be improved. This results in making it possible to secure an exposure period of the reflected light within the limited frame period, so that an image signal with further improved distance resolution can be generated.

Furthermore, the charge transfer control unit also preferably sets the delay periods of the control pulses to different periods between the groups of the charge readout regions divided into N, and the signal readout unit preferably sets the readout timings for each group of the charge readout regions divided into N such that the subframe period becomes longer as the delay period is longer. According to such a configuration, the exposure period of the group of charge readout regions for which a time window corresponding to a timing of reflected light of pulsed light generated at a long distance is set can be made longer than the exposure period of the group of charge readout regions for which a time window corresponding to a timing of reflected light of pulsed light generated at a short distance is set. This results in making it possible to generate an image signal with further improved distance resolution even in a case where an object in a wide distance range is to be measured.

Furthermore, the charge transfer control unit preferably performs setting to exchange the delay periods of the control pulses with respect to the generation timing to be applied corresponding to one group of the charge readout regions in one frame period and the delay periods of the control pulses with respect to the generation timing to be applied corresponding to another group of the charge readout regions in one frame period, in a frame period immediately after the one frame period. In this case, it is possible to reduce deviation between the exposure period of one group of the charge readout regions and the exposure period of another group of the charge readout regions in consecutive frame periods. This results in making it possible to secure an exposure period of the reflected light within the limited frame period, so that an image signal with further improved distance resolution can be generated.

Furthermore, the signal readout unit also preferably performs setting to exchange the readout timings related to one group of the charge readout regions and the readout timings related to another group of the charge readout regions in one frame period, in a frame period immediately after the one frame period. According to this, it is possible to read out the detection signals from the groups after reducing deviation between the exposure period of one group of the charge readout regions and the exposure period of the other group of the charge readout regions in the consecutive frame periods. This results in making it possible to acquire the detection signals for which the exposure period of the reflected light within the limited frame period is secured, so that an image signal with further improved distance resolution can be generated.

Furthermore, the distance image measuring device also preferably includes a plurality of pixel circuit units arranged in a plurality of rows, and the signal readout unit preferably performs control such that charge accumulation periods of the first to the M-th charge readout regions coincide with each other between rows of the plurality of pixel circuit units. By adopting such a configuration, two-dimensional distance information can be obtained without distortion.

Furthermore, the distance image measuring device also preferably includes a plurality of pixel circuit units arranged in a plurality of rows, and the signal readout unit preferably performs control so as to shift charge accumulation periods of the first to the M-th charge readout regions between the rows of the plurality of pixel circuit units. According to such a configuration, a waiting period from exposure to readout in rows of the plurality of pixel circuit units can be shortened, so that noise in detection signals to be read out can be reduced. This results in making it possible to obtain a two-dimensional image signal with less noise.

In addition, it is also preferable that switch elements connected between the charge transfer control unit and the control electrodes of the plurality of pixel circuit units for each of the plurality of rows and between the control electrodes and a fixed potential are provided, and the switch elements operate to selectively apply either a control pulse or the fixed potential to the control electrodes in accordance with a selection signal from the outside. According to this, the control pulse from the charge transfer control unit can be selectively applied for each row of the plurality of pixel circuit units. This results in making it possible to control charge accumulation periods of the charge readout regions for each row of the plurality of pixel circuit units, so that it becomes easy to generate an image signal with improved distance resolution.

### Reference Signs List

10 Distance image sensor
Lp Pulsed light
L_{R} Incident pulsed light
S Object
22₁ to 22₆ Charge readout region
G₁ to G₆ Control electrode
26₁ to 26₆ Voltage detection unit
11 Light source
13 Pixel circuit (pixel circuit unit)
21 Photoelectric conversion region
31 Light source driver
32 Pixel driver (charge transfer control unit)
15 Signal readout circuit (signal readout unit)
17 Arithmetic circuit
53 Selection transistor (switch)
67₁ to 67₆, 67_{D}, 69₁ to 69₆, 69_{D} Switch element
L3 Wiring portion (signal line)

## Claims

1. A distance image measuring device comprising:
a light source configured to generate pulsed light;
a light source control unit configured to control the light source so as to repeatedly generate the pulsed light within a periodic frame period;
a pixel circuit unit including a photoelectric conversion region that converts light into charges, first to M-th (M is an integer equal to or greater than 2) charge readout regions provided close to the photoelectric conversion region and spaced apart from each other, and first to M-th control electrodes respectively provided corresponding to the photoelectric conversion region and the first to the M-th charge readout regions and provided for applying first to M-th control pulses for charge transfer between the photoelectric conversion region and the first to the M-th charge readout regions;
a charge transfer control unit configured to repeatedly apply the first to the M-th control pulses to the first to the M-th control electrodes within the frame period while being delayed from generation timings of the pulsed light by the light source control unit; and
a signal readout unit configured to read out detection signals corresponding to first to M-th charge amounts which are amounts of charges accumulated in the first to the M-th charge readout regions of the pixel circuit unit, from the first to the M-th charge readout regions,
wherein the signal readout unit reads out the detection signals from a group of charge readout regions obtained by dividing the first to the M-th charge readout regions into N (N is an integer equal to or greater than 2) at different readout timings for each group of the charge readout regions divided into N within the frame period.

2. The distance image measuring device according to claim 1, wherein the charge transfer control unit maintains delay periods of the control pulses with respect to the generation timings to be applied corresponding to the group of the charge readout regions to be substantially constant within a subframe period sandwiched between the readout timings of the respective groups of the charge readout regions divided into N.

3. The distance image measuring device according to claim 1 or 2, wherein the signal readout unit includes a plurality of signal lines respectively electrically connected to a plurality of charge readout regions included in the group of the charge readout regions divided into N via a switch and reads out the detection signals in parallel from the plurality of charge readout regions via the plurality of signal lines by turning on the switch at the readout timings.

4. The distance image measuring device according to claim 2, wherein
the charge transfer control unit sets the delay periods of the control pulses to different periods among groups of the charge readout regions divided into N, and
the signal readout unit sets the readout timings for each group of the charge readout regions divided into N such that the subframe period increases as the delay periods increase.

5. The distance image measuring device according to any one of claims 1 to 4, wherein the charge transfer control unit performs setting to exchange delay periods of the control pulses with respect to the generation timings to be applied corresponding to one group of charge readout regions in one frame period and delay periods of the control pulses with respect to the generation timings to be applied corresponding to another group of charge readout regions in one frame period, in a frame period immediately after the one frame period.

6. The distance image measuring device according to claim 5, wherein the signal readout unit performs setting to exchange the readout timings related to one group of charge readout regions and the readout timings related to another group of charge readout regions in one frame period, in a frame period immediately after the one frame period.

7. The distance image measuring device according to any one of claims 1 to 6, comprising a plurality of the pixel circuit units arranged in a plurality of rows,
wherein the signal readout unit performs control such that charge accumulation periods of the first to the M-th charge readout regions coincide with each other among the rows of the plurality of the pixel circuit units.

8. The distance image measuring device according to any one of claims 1 to 6, comprising:
a plurality of the pixel circuit units arranged in a plurality of rows,
wherein the signal readout unit performs control to shift charge accumulation periods of the first to the M-th charge readout regions among the rows of the plurality of the pixel circuit units.

9. The distance image measuring device according to any one of claims 1 to 6, comprising:
a plurality of the pixel circuit units arranged in a plurality of rows,
wherein the signal readout unit reads out the detection signals at further different timings for each group of pixel circuits divided in row units.

10. The distance image measuring device according to claim 9, wherein
switch elements connected between the charge transfer control unit and the control electrodes of the plurality of pixel circuit units for each of the plurality of rows and between the control electrodes and a fixed potential are provided, and
the switch elements operate to selectively apply either the control pulses or the fixed potential to the control electrodes according to a selection signal from the outside.

11. A distance image measuring method comprising:
a light source control step of a light source control unit controlling a light source so as to repeatedly generate pulsed light within a periodic frame period;
a charge transfer control step of, using a pixel circuit unit including a photoelectric conversion region that converts light into charges, first to M-th (M is an integer equal to or greater than 2) charge readout regions provided close to the photoelectric conversion region and spaced apart from each other, and first to M-th control electrodes respectively provided corresponding to the photoelectric conversion region and the first to the M-th charge readout regions and provided for applying first to M-th control pulses for charge transfer between the photoelectric conversion region and the first to the M-th charge readout regions, a charge transfer control unit repeatedly applying the first to the M-th control pulses to the first to the M-th control electrodes within the frame period while being delayed from generation of the pulsed light by the light source control unit; and
a signal readout step of a signal readout unit reading out detection signals corresponding to first to M-th charge amounts which are amounts of charges accumulated in the first to the M-th charge readout regions of the pixel circuit unit, from the first to the M-th charge readout regions,
wherein in the signal readout step, the detection signals are read out from a group of charge readout regions obtained by dividing the first to the M-th charge readout regions into N (N is an integer equal to or greater than 2) at different readout timings for each group of the charge readout regions divided into N within the frame period.
